# EUROPEAN PATENT APPLICATION

(11) **EP 4 664 381 A1**
(43) Date of publication of application: **17.12.2025**
(21) Application number: 25178442.7
(22) Date of filing: 23.05.2025
(51) Int. Cl.: G06Q 40/02, G06Q 20/40, G06Q 20/10

(54) **SYSTEM AND METHOD FOR CARD TRANSACTION LEVEL PRICING AND BALANCE MANAGEMENT**

(30) Priority: 13.06.2024 IN 202411045681; 26.07.2024 US 202418785584
(71) Applicant: JPMorgan Chase Bank, N.A., New York, NY 10179 (US)
(72) Inventor: RUDRARAJU, Satya, 10179 New York (IN)
(74) Representative: Keil & Schaafhausen Patentanwälte PartGmbB

(57) **Abstract**

Various methods and processes, apparatuses or systems, and media for transaction level pricing and balance management are disclosed. A processor receives a plurality of transactions associated with a card; enriches the plurality of transactions by consuming external transaction data associated with each transaction, populating preconfigured internal attributes data, and outputting enriched transactions; publishes the enriched transactions for executing a transaction level pricing and balance management algorithm; consumes the enriched transactions; identifies type of each transaction from the consumed enriched transactions by applying predefined rules; and executes, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, remove account processing at accumulated balance level.

## Description

### CROSS-REFERENCE TO RELATED APPLICATIONS

This application claims the benefit of priority from Indian Provisional Patent Application No. 202411045681, filed June 13, 2024, which is herein incorporated by reference in its entirety.

### TECHNICAL FIELD

This disclosure generally relates to data processing, and, more particularly, to methods and apparatuses for implementing a platform, language, cloud, and database agnostic transaction level data management module configured for card transaction level pricing and balance management.

### BACKGROUND

The developments described in this section are known to the inventors. However, unless otherwise indicated, it should not be assumed that any of the developments described in this section qualify as prior art merely by virtue of their inclusion in this section, or that these developments are known to a person of ordinary skill in the art.

Today, magnetic cards, such as commercial credit cards, debit cards, or transfer funds cards are used, both online and in person, for purchases, payments, cash advances, or other financial transactions. Conventional approaches/tools typically calculate interests associated with these transactions at balance level, not at transaction level.

For example, conventional approaches/tools for calculating interests may include, but not limited thereto, the following limitations: there appears to be no point in time estimated interest charges capability; no split cycle interest charge calculation capability; transaction level pricing may be corrected only by moving the balances credit to original balance and debit to new balance), and often requiring manual work to fix the balances; incorrect interest charge calculations while processing the history fee refunds (disputes, Servicemembers Civil Relief Act (SCRA) - a program that provides certain protections, i.e., lower interests, in lending for servicemembers who are called to active duty), backdated payment/reversals and customer requested fee adjustments) due to unavailability of history data; limited balance buckets; limited account level preapproved promotional offer; interest charges may not be configured at transaction level; backdated payments are getting allocated to current balances instead of as on transaction date balances; interest charges on backdated payments are getting calculated using balances available at cycle time and with hard coded high to low Annual Percentage Rates (APRs); no reallocation is being done for any subsequent payments during backdated payments, reversals, disputes and fraud; for backdating payments, past dues are not getting recalculated correctly as minimum payment due recalculations are not accurate in history cycles; for backdated payments, fees are getting refunded without any reevaluations, as we are not re applying payments and recalculating the Minimum Payment Due (MPD) using options as on that date; disputes and backdating updates are not in sync - disputes are at transaction level and backdating is at balance level; options used for calculation is not being saved - backdating uses current options including paid in full; MPD is not getting calculated correctly as reallocation is not happening; for payment reversals - interest charges are being calculated without re-allocating other payments in the cycle, and no additional fees may be assessed if the accounts are qualified under Unfair, Deceptive, or Abusive Acts or Practices (UDAP); unmatched payment reversals are being applied to zero (0) % never ending promo balances; no common calculators for interest charge and fee calculations, etc.

### SUMMARY

The present disclosure, through one or more of its various aspects, embodiments, and/or specific features or sub-components, provides, among other features, various systems, servers, devices, methods, media, programs, and platforms for implementing a platform, language, cloud, and database agnostic transaction level data management module configured for card transaction level pricing and balance management, thereby allowing accurate interest charge calculations, removal of number of balance bucket limitations, accurate payment allocations, split cycle interest charge calculations, and service a customer with point in time estimated fees/interest charges, but the disclosure is not limited thereto.

For example, in executing balance management, the transaction level data management module may be configured to group transaction monetary amounts into transaction categories and store these groupings on the account as a breakdown of the account's balance, but the disclosure is not limited thereto.

Moreover, the transaction level data management module may be configured to: for MPD calculations, calculate minimum pay due amounts for all balances, i.e., purchases, balance transfers, cash advances, flexible financing offers, fees, interest charges and past dues, based on minimum pay rules and any special payment obligations for flexible financing offer balances; charge fees which may be associated with some particular type of transactions or services - the charges for late payments or over limit, etc.; for interest charges, group transaction category amounts into term balances - interest charges may be assessed at the term balance level, i.e., each term balance may receive a different APR or rate; execute promotion management capabilities (promotions are offers given by a financial institution to its customer to increase the customer's interest in using their card more by providing a lower rate of interest on their transactions which they do after availing that particular promotional offers; execute payment allocation process to pay out monies for respective balance segment buckets for which a customer is outstanding; execute past due calculations - at cycle time outstanding minimum payment would be moved to past due balances - system would recalculate past due during payment and payment reversal processing, etc., but the disclosure is not limited thereto.

Backdating is a process where accounts are automatically adjusted for payments, credits, settled disputes, and payment reversals received in the current cycle, with transaction dates from a prior cycle. In some embodiments, as these transactions post, the backdating process implemented by the transaction level data management module may be configured to automatically calculate and refund/assess finance charges, fees, recalculate minimum payment dues and past dues based on what would have happened if the transaction had posted in the correct period.

In some embodiments, a method for transaction level pricing and balance management by utilizing one or more processors along with allocated memory is disclosed. The method may include: receiving a plurality of transactions associated with a card; enriching the plurality of transactions by consuming external transaction data associated with each transaction, populating preconfigured internal attributes data, and outputting enriched transactions; publishing the enriched transactions onto a pricing orchestrator module for executing a transaction level pricing and balance management algorithm; consuming the enriched transactions; identifying type of each transaction from the consumed enriched transactions by applying predefined rules; and executing, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

In some embodiments, the card may be a credit card or a debit card.

In some embodiments, the accumulated balance level may include purchase, cash, and promotions, but the disclosure is not limited thereto.

In some embodiments, in identifying type of each transaction, the method may further include: identifying one or more of the following transactions: credit card transaction; debit card transaction; customer disputing a transaction; customer requesting a change on annual percentage rate; payment transaction; and reversal transaction.

In some embodiments, the method may further include: storing all transactions with corresponding pricing task execution status onto a database.

In some embodiments, the method may further include: storing all transaction level updates onto a staging database.

In some embodiments, the method may further include: consuming all debits for promotion qualifications; applying preconfigured promotional rules; consuming account level promotion identifiers to be used for the promotion qualifications; evaluating whether the transaction is eligible for any promotional offer or customer requested offer based on applying preconfigured promotional rules; creating a record of promotion data associated with the promotional offer or the customer requested offer along with a transaction key onto a promotional database; publishing, by accessing the promotional database, a response indicating promotion qualified "Yes" or "No" back to the pricing orchestrator module; and updating corresponding transaction among the plurality of transactions in correspondence with publishing the response.

In some embodiments, a system for transaction level pricing and balance management is disclosed. The system may include: a processor; and a memory operatively connected to the processor via a communication interface, the memory storing computer readable instructions, when executed, may cause the processor to: receive a plurality of transactions associated with a card; enrich the plurality of transactions by consuming external transaction data associated with each transaction, populating preconfigured internal attributes data, and outputting enriched transactions; publish the enriched transactions onto a pricing orchestrator module for executing a transaction level pricing and balance management algorithm; consume the enriched transactions; identify type of each transaction from the consumed enriched transactions by applying predefined rules; and execute, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

In some embodiments, in identifying type of each transaction, the processor may be further configured to: identify one or more of the following transactions: credit card transaction; debit card transaction; customer disputing a transaction; customer requesting a change on annual percentage rate; payment transaction; and reversal transaction.

In some embodiments, the processor may be further configured to: store all transactions with corresponding pricing task execution status onto a database.

In some embodiments, the processor may be further configured to: store all transaction level updates onto a staging database.

In some embodiments, the processor may be further configured to: consume all debits for promotion qualifications; apply preconfigured promotional rules; consume account level promotion identifiers to be used for the promotion qualifications; evaluate whether the transaction is eligible for any promotional offer or customer requested offer based on applying preconfigured promotional rules; create a record of promotion data associated with the promotional offer or the customer requested offer along with a transaction key onto a promotional database; publish, by accessing the promotional database, a response indicating promotion qualified "Yes" or "No" back to the pricing orchestrator module; and update corresponding transaction among the plurality of transactions in correspondence with publishing the response.

In some embodiments, a non-transitory computer readable medium configured to store instructions for transaction level pricing and balance management is disclosed. The instructions, when executed, may cause a processor to perform the following: receiving a plurality of transactions associated with a card; enriching the plurality of transactions by consuming external transaction data associated with each transaction, populating preconfigured internal attributes data, and outputting enriched transactions; publishing the enriched transactions onto a pricing orchestrator module for executing a transaction level pricing and balance management algorithm; consuming the enriched transactions; identifying type of each transaction from the consumed enriched transactions by applying predefined rules; and executing, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

In some embodiments, in identifying type of each transaction, the instructions, when executed, may cause the processor to further perform the following: identifying one or more of the following transactions: credit card transaction; debit card transaction; customer disputing a transaction; customer requesting a change on annual percentage rate; payment transaction; and reversal transaction.

In some embodiments, the instructions, when executed, may cause the processor to further perform the following: storing all transactions with corresponding pricing task execution status onto a database.

In some embodiments, the instructions, when executed, may cause the processor to further perform the following: storing all transaction level updates onto a staging database.

In some embodiments, the instructions, when executed, may cause the processor to further perform the following: consuming all debits for promotion qualifications; applying preconfigured promotional rules; consuming account level promotion identifiers to be used for the promotion qualifications; evaluating whether the transaction is eligible for any promotional offer or customer requested offer based on applying preconfigured promotional rules; creating a record of promotion data associated with the promotional offer or the customer requested offer along with a transaction key onto a promotional database; publishing, by accessing the promotional database, a response indicating promotion qualified "Yes" or "No" back to the pricing orchestrator module; and updating corresponding transaction among the plurality of transactions in correspondence with publishing the response.

### BRIEF DESCRIPTION OF THE DRAWINGS

The present disclosure is further described in the detailed description which follows, in reference to the noted plurality of drawings, by way of non-limiting examples of preferred embodiments of the present disclosure, in which like characters represent like elements throughout the several views of the drawings.
FIG. 1 illustrates a computer system for implementing a platform, language, database, and cloud agnostic transaction level data management module configured for card transaction level pricing and balance management in accordance with an embodiment.
FIG. 2 illustrates an exemplary diagram of a network environment with a platform, language, database, and cloud agnostic transaction level data management device in accordance with an embodiment.
FIG. 3 illustrates a system diagram for implementing a platform, language, database, and cloud agnostic transaction level data management device having a platform, language, database, and cloud agnostic transaction level data management module in accordance with an embodiment.
FIG. 4 illustrates a system diagram for implementing a platform, language, database, and cloud agnostic transaction level data management module of FIG. 3 in accordance with an embodiment.
FIG. 5 illustrates an architecture implemented by the platform, language, database, and cloud agnostic transaction level data management module of FIG. 4 in accordance with an embodiment.
FIG. 6 illustrates an exemplary flow diagram of disputes resolution as implemented by the platform, language, database, and cloud agnostic transaction level data management module of FIG. 4 in accordance with an embodiment.
FIG. 7 illustrates an exemplary flow diagram of requesting APR change as implemented by the platform, language, database, and cloud agnostic transaction level data management module of FIG. 4 in accordance with an embodiment.
FIG. 8 illustrates an exemplary process of debits transaction as implemented by the platform, language, database, and cloud agnostic transaction level data management module of FIG. 4 in accordance with an embodiment.
FIG. 9 illustrates an exemplary process of credits transaction as implemented by the platform, language, database, and cloud agnostic transaction level data management module of FIG. 4 in accordance with an embodiment.
FIG. 10 illustrates an exemplary process of payments transaction as implemented by the platform, language, database, and cloud agnostic transaction level data management module of FIG. 4 in accordance with an embodiment.
FIG. 11 illustrates an exemplary process of reversal transaction as implemented by the platform, language, database, and cloud agnostic transaction level data management module of FIG. 4 in accordance with an embodiment.
FIG. 12 illustrates an exemplary process of disputes transaction as implemented by the platform, language, database, and cloud agnostic transaction level data management module of FIG. 4 in accordance with an embodiment.
FIG. 13 illustrates an exemplary flow chart of a process implemented by the platform, language, database, and cloud agnostic transaction level data management module of FIG. 4 for card transaction level pricing and balance management in accordance with an embodiment.

### DETAILED DESCRIPTION

Through one or more of its various aspects, embodiments and/or specific features or sub-components of the present disclosure, are intended to bring out one or more of the advantages as specifically described above and noted below.

The examples may also be embodied as one or more non-transitory computer readable media having instructions stored thereon for one or more aspects of the present technology as described and illustrated by way of the examples herein. The instructions in some examples include executable code that, when executed by one or more processors, cause the processors to carry out steps necessary to implement the methods of the examples of this technology that are described and illustrated herein.

As is traditional in the field of the present disclosure, example embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the example embodiments may be physically separated into two or more interacting and discrete blocks, units and/or modules without departing from the scope of the inventive concepts. Further, the blocks, units and/or modules of the example embodiments may be physically combined into more complex blocks, units and/or modules without departing from the scope of the present disclosure.

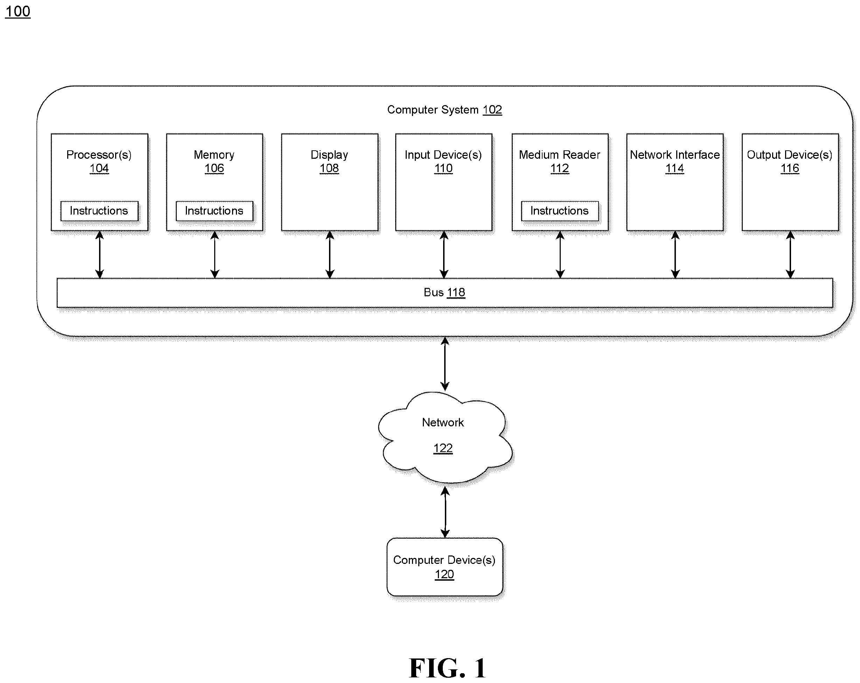

FIG. 1 is an exemplary system 100 for use in implementing a platform, language, database, and cloud agnostic transaction level data management module configured for transaction level pricing and balance management in accordance with an embodiment. The system 100 is generally shown and may include a computer system 102, which is generally indicated.

The computer system 102 may include a set of instructions that can be executed to cause the computer system 102 to perform any one or more of the methods or computer-based functions disclosed herein, either alone or in combination with the other described devices. The computer system 102 may operate as a standalone device or may be connected to other systems or peripheral devices. For example, the computer system 102 may include, or be included within, any one or more computers, servers, systems, communication networks or cloud environment. Even further, the instructions may be operative in such cloud-based computing environment.

In a networked deployment, the computer system 102 may operate in the capacity of a server or as a client user computer in a server-client user network environment, a client user computer in a cloud computing environment, or as a peer computer system in a peer-to-peer (or distributed) network environment. The computer system 102, or portions thereof, may be implemented as, or incorporated into, various devices, such as a personal computer, a tablet computer, a set-top box, a personal digital assistant, a mobile device, a palmtop computer, a laptop computer, a desktop computer, a communications device, a wireless smart phone, a personal trusted device, a wearable device, a global positioning satellite (GPS) device, a web appliance, or any other machine capable of executing a set of instructions (sequential or otherwise) that specify actions to be taken by that machine. Further, while a single computer system 102 is illustrated, additional embodiments may include any collection of systems or sub-systems that individually or jointly execute instructions or perform functions. The term system shall be taken throughout the present disclosure to include any collection of systems or sub-systems that individually or jointly execute a set, or multiple sets, of instructions to perform one or more computer functions.

As illustrated in FIG. 1, the computer system 102 may include at least one processor 104. The processor 104 is tangible and non-transitory. As used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. The processor 104 is an article of manufacture and/or a machine component. The processor 104 is configured to execute software instructions in order to perform functions as described in the various embodiments herein. The processor 104 may be a general-purpose processor or may be part of an application specific integrated circuit (ASIC). The processor 104 may also be a microprocessor, a microcomputer, a processor chip, a controller, a microcontroller, a digital signal processor (DSP), a state machine, or a programmable logic device. The processor 104 may also be a logical circuit, including a programmable gate array (PGA) such as a field programmable gate array (FPGA), or another type of circuit that includes discrete gate and/or transistor logic. The processor 104 may be a central processing unit (CPU), a graphics processing unit (GPU), or both. Additionally, any processor described herein may include multiple processors, parallel processors, or both. Multiple processors may be included in, or coupled to, a single device or multiple devices.

The computer system 102 may also include a computer memory 106. The computer memory 106 may include a static memory, a dynamic memory, or both in communication. Memories described herein are tangible storage mediums that can store data and executable instructions, and are non-transitory during the time instructions are stored therein. Again, as used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. The memories are an article of manufacture and/or machine component. Memories described herein are computer-readable mediums from which data and executable instructions can be read by a computer. Memories as described herein may be random access memory (RAM), read only memory (ROM), flash memory, electrically programmable read only memory (EPROM), electrically erasable programmable read-only memory (EEPROM), registers, a hard disk, a cache, a removable disk, tape, compact disk read only memory (CD-ROM), digital versatile disk (DVD), floppy disk, or any other form of storage medium known in the art. Memories may be volatile or non-volatile, secure and/or encrypted, unsecure and/or unencrypted. Of course, the computer memory 106 may comprise any combination of memories or a single storage.

The computer system 102 may further include a display 108, such as a liquid crystal display (LCD), an organic light emitting diode (OLED), a flat panel display, a solid-state display, a cathode ray tube (CRT), a plasma display, or any other known display.

The computer system 102 may also include at least one input device 110, such as a keyboard, a touch-sensitive input screen or pad, a speech input, a mouse, a remote control device having a wireless keypad, a microphone coupled to a speech recognition engine, a camera such as a video camera or still camera, a cursor control device, a GPS device, a visual positioning system (VPS) device, an altimeter, a gyroscope, an accelerometer, a proximity sensor, or any combination thereof. Those skilled in the art appreciate that various embodiments of the computer system 102 may include multiple input devices 110. Moreover, those skilled in the art further appreciate that the above-listed, exemplary input devices 110 are not meant to be exhaustive and that the computer system 102 may include any additional, or alternative, input devices 110.

The computer system 102 may also include a medium reader 112 which is configured to read any one or more sets of instructions, e.g., software, from any of the memories described herein. The instructions, when executed by a processor, can be used to perform one or more of the methods and processes as described herein. In a particular embodiment, the instructions may reside completely, or at least partially, within the memory 106, the medium reader 112, and/or the processor 104 during execution by the computer system 102.

Furthermore, the computer system 102 may include any additional devices, components, parts, peripherals, hardware, software, or any combination thereof which are commonly known and understood as being included with or within a computer system, such as, but not limited to, a network interface 114 and an output device 116. The output device 116 may be, but is not limited to, a speaker, an audio out, a video out, a remote control output, a printer, or any combination thereof.

Each of the components of the computer system 102 may be interconnected and communicate via a bus 118 or other communication link. As shown in FIG. 1, the components may each be interconnected and communicate via an internal bus. However, those skilled in the art appreciate that any of the components may also be connected via an expansion bus. Moreover, the bus 118 may enable communication via any standard or other specification commonly known and understood such as, but not limited to, peripheral component interconnect, peripheral component interconnect express, parallel advanced technology attachment, serial advanced technology attachment, etc.

The computer system 102 may be in communication with one or more additional computer devices 120 via a network 122. The network 122 may be, but is not limited to, a local area network, a wide area network, the Internet, a telephony network, a short-range network, or any other network commonly known and understood in the art. The short-range network may include, for example, infrared, near field communication, ultraband, or any combination thereof. Those skilled in the art appreciate that additional networks 122 which are known and understood may additionally or alternatively be used and that the exemplary networks 122 are not limiting or exhaustive. Also, while the network 122 is shown in FIG. 1 as a wireless network, those skilled in the art appreciate that the network 122 may also be a wired network.

The additional computer device 120 is shown in FIG. 1 as a personal computer. However, those skilled in the art appreciate that, in alternative embodiments of the present application, the computer device 120 may be a laptop computer, a tablet PC, a personal digital assistant, a mobile device, a palmtop computer, a desktop computer, a communications device, a wireless telephone, a personal trusted device, a web appliance, a server, or any other device that is capable of executing a set of instructions, sequential or otherwise, that specify actions to be taken by that device. Of course, those skilled in the art appreciate that the above-listed devices are merely exemplary devices and that the device 120 may be any additional device or apparatus commonly known and understood in the art without departing from the scope of the present application. For example, the computer device 120 may be the same or similar to the computer system 102. Furthermore, those skilled in the art similarly understand that the device may be any combination of devices and apparatuses.

Of course, those skilled in the art appreciate that the above-listed components of the computer system 102 are merely meant to be exemplary and are not intended to be exhaustive and/or inclusive. Furthermore, the examples of the components listed above are also meant to be exemplary and similarly are not meant to be exhaustive and/or inclusive.

In some embodiments, the transaction level data management module implemented by the system 100 may be platform, language, database, and cloud agnostic that may allow for consistent easy orchestration and passing of data through various components to output a desired result regardless of platform, browser, language, database, and cloud environment by writing programs accordingly. Since the disclosed process, in some embodiments, is platform, language, database, browser, and cloud agnostic, the transaction level data management modulemay be independently tuned or modified for optimal performance without affecting the configuration or data files. The configuration or data files, in some embodiments, may be written using JSON, but the disclosure is not limited thereto. For example, the configuration or data files may easily be extended to other readable file formats such as XML, YAML, etc., or any other configuration based languages.

In accordance with various embodiments of the present disclosure, the methods described herein may be implemented using a hardware computer system that executes software programs. Further, in a non-limited embodiment, implementations can include distributed processing, component/object distributed processing, and an operation mode having parallel processing capabilities. Virtual computer system processing can be constructed to implement one or more of the methods or functionality as described herein, and a processor described herein may be used to support a virtual processing environment.

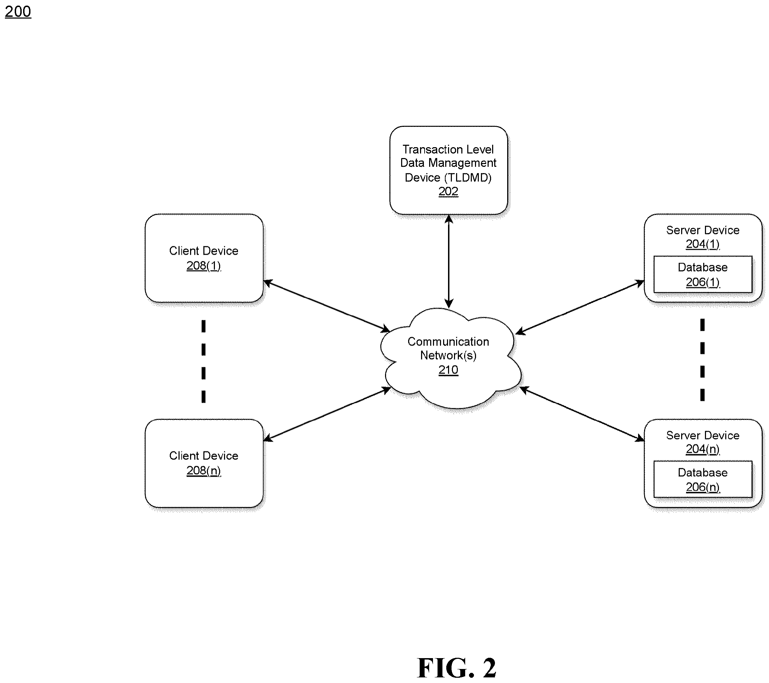

Referring to FIG. 2, a schematic of an exemplary network environment 200 for implementing a language, platform, database, and cloud agnostic transaction level data management device (TLDMD) of the instant disclosure is illustrated.

In some embodiments, the above-described problems associated with conventional tools may be overcome by implementing a TLDMD 202 as illustrated in FIG. 2 that may be configured for implementing a platform, language, database, and cloud agnostic transaction level data management module configured for transaction level pricing and balance management, but the disclosure is not limited thereto.

The TLDMD 202 may have one or more computer system 102s, as described with respect to FIG. 1, which in aggregate provide the necessary functions.

The TLDMD 202 may store one or more applications that can include executable instructions that, when executed by the TLDMD 202, cause the TLDMD 202 to perform actions, such as to transmit, receive, or otherwise process network messages, for example, and to perform other actions described and illustrated below with reference to the figures. The application(s) may be implemented as modules or components of other applications. Further, the application(s) can be implemented as operating system extensions, modules, plugins, or the like.

Even further, the application(s) may be operative in a cloud-based computing environment. The application(s) may be executed within or as virtual machine(s) or virtual server(s) that may be managed in a cloud-based computing environment. Also, the application(s), and even the TLDMD 202 itself, may be located in virtual server(s) running in a cloud-based computing environment rather than being tied to one or more specific physical network computing devices. Also, the application(s) may be running in one or more virtual machines (VMs) executing on the TLDMD 202. Additionally, in one or more embodiments of this technology, virtual machine(s) running on the TLDMD 202 may be managed or supervised by a hypervisor.

In the network environment 200 of FIG. 2, the TLDMD 202 is coupled to a plurality of server devices 204(1)-204(n) that hosts a plurality of databases 206(1)-206(n), and also to a plurality of client devices 208(1)-208(n) via communication network(s) 210. A communication interface of the TLDMD 202, such as the network interface 114 of the computer system 102 of FIG. 1, operatively couples and communicates between the TLDMD 202, the server devices 204(1)-204(n), and/or the client devices 208(1)-208(n), which are all coupled together by the communication network(s) 210, although other types and/or numbers of communication networks or systems with other types and/or numbers of connections and/or configurations to other devices and/or elements may also be used.

The communication network(s) 210 may be the same or similar to the network 122 as described with respect to FIG. 1, although the TLDMD 202, the server devices 204(1)-204(n), and/or the client devices 208(1)-208(n) may be coupled together via other topologies. Additionally, the network environment 200 may include other network devices such as one or more routers and/or switches, for example, which are well known in the art and thus will not be described herein.

By way of example only, the communication network(s) 210 may include local area network(s) (LAN(s)) or wide area network(s) (WAN(s)), and can use TCP/IP over Ethernet and industry-standard protocols, although other types and/or numbers of protocols and/or communication networks may be used. The communication network(s) 210 in this example may employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like.

The TLDMD 202 may be a standalone device or integrated with one or more other devices or apparatuses, such as one or more of the server devices 204(1)-204(n), for example. In one particular example, the TLDMD 202 may be hosted by one of the server devices 204(1)-204(n), and other arrangements are also possible. Moreover, one or more of the devices of the TLDMD 202 may be in the same or a different communication network including one or more public, private, or cloud networks, for example.

The plurality of server devices 204(1)-204(n) may be the same or similar to the computer system 102 or the computer device 120 as described with respect to FIG. 1, including any features or combination of features described with respect thereto. For example, any of the server devices 204(1)-204(n) may include, among other features, one or more processors, a memory, and a communication interface, which are coupled together by a bus or other communication link, although other numbers and/or types of network devices may be used. The server devices 204(1)-204(n) in this example may process requests received from the TLDMD 202 via the communication network(s) 210 according to the HTTP-based and/or JavaScript Object Notation (JSON) protocol, for example, although other protocols may also be used.

The server devices 204(1)-204(n) may be hardware or software or may represent a system with multiple servers in a pool, which may include internal or external networks. The server devices 204(1)-204(n) hosts the databases 206(1)-206(n) that are configured to store metadata sets, data quality rules, and newly generated data.

Although the server devices 204(1)-204(n) are illustrated as single devices, one or more actions of each of the server devices 204(1)-204(n) may be distributed across one or more distinct network computing devices that together comprise one or more of the server devices 204(1)-204(n). Moreover, the server devices 204(1)-204(n) are not limited to a particular configuration. Thus, the server devices 204(1)-204(n) may contain a plurality of network computing devices that operate using a master/slave approach, whereby one of the network computing devices of the server devices 204(1)-204(n) operates to manage and/or otherwise coordinate operations of the other network computing devices.

The server devices 204(1)-204(n) may operate as a plurality of network computing devices within a cluster architecture, a peer-to peer architecture, virtual machines, or within a cloud architecture, for example. Thus, the technology disclosed herein is not to be construed as being limited to a single environment and other configurations and architectures are also envisaged.

The plurality of client devices 208(1)-208(n) may also be the same or similar to the computer system 102 or the computer device 120 as described with respect to FIG. 1, including any features or combination of features described with respect thereto. Client device in this context refers to any computing device that interfaces to communications network(s) 210 to obtain resources from one or more server devices 204(1)-204(n) or other client devices 208(1)-208(n).

In some embodiments, the client devices 208(1)-208(n) in this example may include any type of computing device that can facilitate the implementation of the TLDMD 202 that may efficiently provide a platform for implementing a platform, language, database, and cloud agnostic transaction level data management module configured for transaction level pricing and balance management, but the disclosure is not limited thereto.

The client devices 208(1)-208(n) may run interface applications, such as standard web browsers or standalone client applications, which may provide an interface to communicate with the TLDMD 202 via the communication network(s) 210 in order to communicate user requests. The client devices 208(1)-208(n) may further include, among other features, a display device, such as a display screen or touchscreen, and/or an input device, such as a keyboard, for example.

Although the exemplary network environment 200 with the TLDMD 202, the server devices 204(1)-204(n), the client devices 208(1)-208(n), and the communication network(s) 210 are described and illustrated herein, other types and/or numbers of systems, devices, components, and/or elements in other topologies may be used. It is to be understood that the systems of the examples described herein are for exemplary purposes, as many variations of the specific hardware and software used to implement the examples are possible, as may be appreciated by those skilled in the relevant art(s).

One or more of the devices depicted in the network environment 200, such as the TLDMD 202, the server devices 204(1)-204(n), or the client devices 208(1)-208(n), for example, may be configured to operate as virtual instances on the same physical machine. For example, one or more of the TLDMD 202, the server devices 204(1)-204(n), or the client devices 208(1)-208(n) may operate on the same physical device rather than as separate devices communicating through communication network(s) 210. Additionally, there may be more or fewer TLDMDs 202, server devices 204(1)-204(n), or client devices 208(1)-208(n) than illustrated in FIG. 2. In some embodiments, the TLDMD 202 may be configured to send code at run-time to remote server devices 204(1)-204(n), but the disclosure is not limited thereto.

In addition, two or more computing systems or devices may be substituted for any one of the systems or devices in any example. Accordingly, principles and advantages of distributed processing, such as redundancy and replication also may be implemented, as desired, to increase the robustness and performance of the devices and systems of the examples. The examples may also be implemented on computer system(s) that extend across any suitable network using any suitable interface mechanisms and traffic technologies, including by way of example only teletraffic in any suitable form (e.g., voice and modem), wireless traffic networks, cellular traffic networks, Packet Data Networks (PDNs), the Internet, intranets, and combinations thereof.

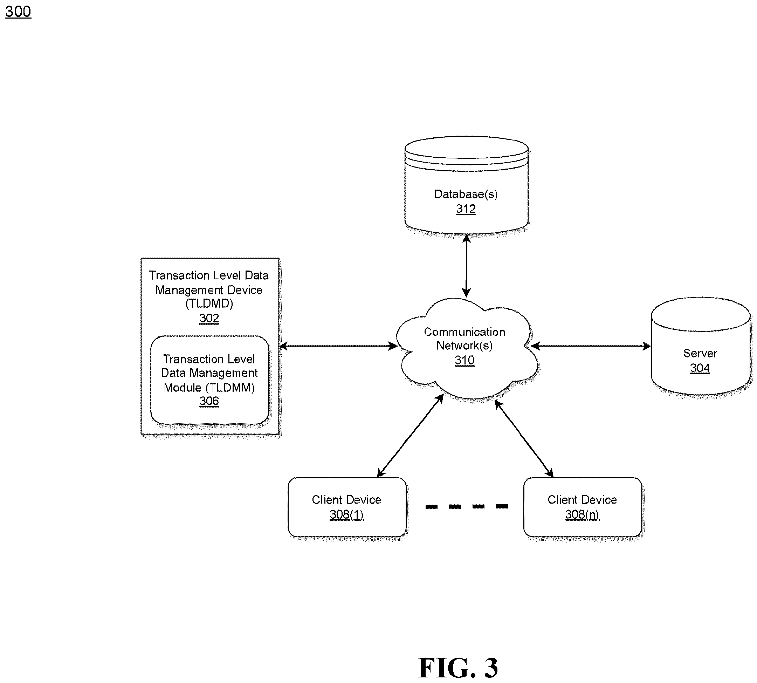

FIG. 3 illustrates a system diagram for implementing a platform, language, and cloud agnostic TLDMD having a platform, language, database, and cloud agnostic transaction level data management module (TLDMM) in accordance with an embodiment.

As illustrated in FIG. 3, the system 300 may include an TLDMD 302 within which an TLDMM 306 is embedded, a server 304, a database(s) 312, a plurality of client devices 308(1) ... 308(n), and a communication network 310.

In some embodiments, the TLDMD 302 including the TLDMM 306 may be connected to the server 304, and the database(s) 312 via the communication network 310. The TLDMD 302 may also be connected to the plurality of client devices 308(1) ... 308(n) via the communication network 310, but the disclosure is not limited thereto. The database(s) 312 may include rule database.

In an embodiment, the TLDMD 302 is described and shown in FIG. 3 as including the TLDMM 306, although it may include other rules, policies, modules, databases, or applications, for example. In some embodiments, the database(s) 312 may be configured to store ready to use modules written for each API for all environments. Although only one database is illustrated in FIG. 3, the disclosure is not limited thereto. Any number of desired databases may be utilized for use in the disclosed invention herein. The database(s) 312 may be a mainframe database, a log database that may produce programming for searching, monitoring, and analyzing machine-generated data via a web interface, etc., but the disclosure is not limited thereto. In addition, the database(s) 312 may store the large code bases models as directed graphs and graph metrics and graph centrality measures.

In some embodiments, the TLDMM 306 may be configured to receive real-time feed of data from the plurality of client devices 308(1) ... 308(n) and secondary sources via the communication network 310.

As may be described below, the TLDMM 306 may be configured to: receive a plurality of transactions associated with a card; enrich the plurality of transactions by consuming external transaction data associated with each transaction, populating preconfigured internal attributes data, and outputting enriched transactions; publish the enriched transactions onto a pricing orchestrator module for executing a transaction level pricing and balance management algorithm; consume the enriched transactions; identify type of each transaction from the consumed enriched transactions by applying predefined rules; and execute, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level, but the disclosure is not limited thereto.

The plurality of client devices 308(1) ... 308(n) are illustrated as being in communication with the TLDMD 302. In this regard, the plurality of client devices 308(1) ... 308(n) may be "clients" (e.g., customers) of the TLDMD 302 and are described herein as such. Nevertheless, it is to be known and understood that the plurality of client devices 308(1) ... 308(n) need not necessarily be "clients" of the TLDMD 302, or any entity described in association therewith herein. Any additional or alternative relationship may exist between either or both of the plurality of client devices 308(1) ... 308(n) and the TLDMD 302, or no relationship may exist.

The first client device 308(1) may be, for example, a smart phone. Of course, the first client device 308(1) may be any additional device described herein. The second client device 308(n) may be, for example, a personal computer (PC). Of course, the second client device 308(n) may also be any additional device described herein. In some embodiments, the server 304 may be the same or equivalent to the server device 204 as illustrated in FIG. 2.

The process may be executed via the communication network 310, which may comprise plural networks as described above. For example, in an embodiment, one or more of the plurality of client devices 308(1) ... 308(n) may communicate with the TLDMD 302 via broadband or cellular communication. Of course, these embodiments are merely exemplary and are not limiting or exhaustive.

The computing device 301 may be the same or similar to any one of the client devices 208(1)-208(n) as described with respect to FIG. 2, including any features or combination of features described with respect thereto. The TLDMD 302 may be the same or similar to the TLDMD 202 as described with respect to FIG. 2, including any features or combination of features described with respect thereto.

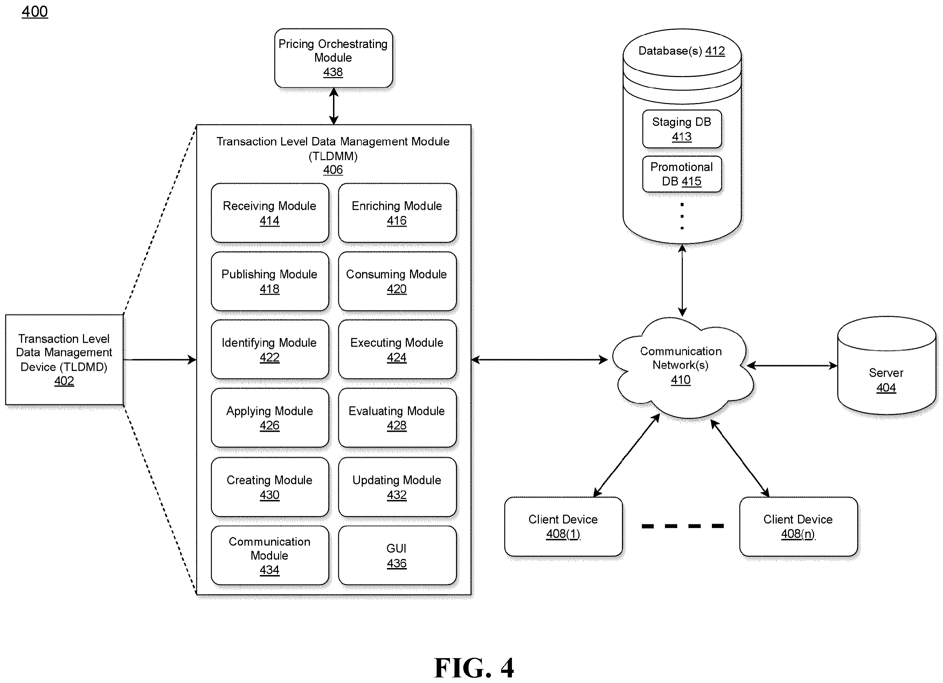

FIG. 4 illustrates a system diagram for implementing a platform, language, database, and cloud agnostic TLDMM of FIG.3 in accordance with an embodiment.

In some embodiments, the system 400 may include a platform, language, database, and cloud agnostic TLDMD 402 within which a platform, language, database, and cloud agnostic TLDMM 406 is embedded, a server 404, database(s) 412 that may include a staging database 413, a promotional database 415, and other databases as disclosed herein, and a communication network 410. In some embodiments, server 404 may comprise a plurality of servers located centrally or located in different locations, but the disclosure is not limited thereto.

In some embodiments, the TLDMD 402 including the TLDMM 406 may be connected to the server 404, a pricing orchestrating module 438, and the database(s) 412 via the communication network 410. The TLDMD 402 may also be connected to the plurality of client devices 408(1)-408(n) via the communication network 410, but the disclosure is not limited thereto. The TLDMM 406, the server 404, the plurality of client devices 408(1)-408(n), the database(s) 412, the communication network 410 as illustrated in FIG. 4 may be the same or similar to the TLDMM 306, the server 304, the plurality of client devices 308(1)-308(n), the database(s) 312, the communication network 310, respectively, as illustrated in FIG. 3.

Details of the TLDMM 406 is provided below with corresponding modules that may be configured for card transaction level pricing and balance management, thereby allowing accurate interest charge calculations, removal of number of balance bucket limitations, accurate payment allocations, split cycle interest charge calculations, and service a customer with point in time estimated fees/interest charges, but the disclosure is not limited thereto.

For example, in executing balance management, the TLDMM 406 may be configured to group transaction monetary amounts into transaction categories and store these groupings on the account as a breakdown of the account's balance, but the disclosure is not limited thereto.

Moreover, the TLDMM 406 may be configured to: for MPD calculations, calculate minimum pay due amounts for all balances, i.e., purchases, balance transfers, cash advances, flexible financing offers, fees, interest charges and past dues, based on minimum pay rules and any special payment obligations for flexible financing offer balances; charge fees which may be associated with some particular type of transactions or services - the charges for late payments or over limit, etc.; for interest charges, group transaction category amounts into term balances - interest charges may be assessed at the term balance level, i.e., each term balance may receive a different APR or rate; execute promotion management capabilities (promotions are offers given by a financial institution to its customer to increase the customer's interest in using their card more by providing a lower rate of interest on their transactions which they do after availing that particular promotional offers; execute payment allocation process to pay out monies for respective balance segment buckets for which a customer is outstanding; execute past due calculations - at cycle time outstanding minimum payment would be moved to past due balances - system would recalculate past due during payment and payment reversal processing, etc., but the disclosure is not limited thereto.

Backdating is a process where accounts are automatically adjusted for payments, credits, settled disputes, and payment reversals received in the current cycle, with transaction dates from a prior cycle. In some embodiments, as these transactions post, the backdating process implemented by the TLDMM 406 may be configured to automatically calculate and refund/assess finance charges, fees, recalculate minimum payment dues and past dues based on what would have happened if the transaction had posted in the correct period.

In some embodiments, as illustrated in FIG. 4, the TLDMM 406 may include a receiving module 414, an enriching module 416, a publishing module 418, a consuming module 420, an identifying module 422, an executing module 424, an applying module 426, an evaluating module 428, a creating module 430, an updating module 432, a communication module 434, and a GUI 436. In some embodiments, interactions and data exchange among these modules included in the TLDMM 406 provide the advantageous effects of the disclosed invention. Functionalities of each module of FIG. 4 may be described in detail below with reference to FIGS. 4-12.

In some embodiments, each of the receiving module 414, enriching module 416, publishing module 418, consuming module 420, identifying module 422, executing module 424, applying module 426, evaluating module 428, creating module 430, updating module 432, and the communication module 434 of the TLDMM 406 of FIG. 4 may be physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies.

In some embodiments, each of the receiving module 414, enriching module 416, publishing module 418, consuming module 420, identifying module 422, executing module 424, applying module 426, evaluating module 428, creating module 430, updating module 432, and the communication module 434 of the TLDMM 406 of FIG. 4 may be implemented by microprocessors or similar, and may be programmed using software (e.g., microcode) to perform various functions discussed herein and may optionally be driven by firmware and/or software.

Alternatively, in some embodiments, each of the receiving module 414, enriching module 416, publishing module 418, consuming module 420, identifying module 422, executing module 424, applying module 426, evaluating module 428, creating module 430, updating module 432, and the communication module 434 of the TLDMM 406 of FIG. 4 may be implemented by dedicated hardware, or as a combination of dedicated hardware to perform some functions and a processor (e.g., one or more programmed microprocessors and associated circuitry) to perform other functions, but the disclosure is not limited thereto. For example, the TLDMM 406 of FIG. 4 may also be implemented by cloud based deployment.

In some embodiments, each of the receiving module 414, enriching module 416, publishing module 418, consuming module 420, identifying module 422, executing module 424, applying module 426, evaluating module 428, creating module 430, updating module 432, and the communication module 434 of the TLDMM 406 of FIG. 4 may be called via corresponding API, but the disclosure is not limited thereto.

In some embodiments, the process implemented by the TLDMM 406 may be executed via the communication module 434 and the communication network 410, which may comprise plural networks as described above. For example, in an embodiment, the various components of the TLDMM 406 may communicate with the server 404, and the database(s) 412 via the communication module 434 and the communication network 410 and the results may be displayed onto the GUI 436. Of course, these embodiments are merely exemplary and are not limiting or exhaustive. The database(s) 412 may include the databases included within the private cloud and/or public cloud and the server 404 may include one or more servers within the private cloud and the public cloud.

In some embodiments, the receiving module 414 may be configured to receive a plurality of transactions associated with a card. The card may be a credit card or a debit card, but the disclosure is not limited thereto.

The enriching module 416 may be configured to enrich the plurality of transactions by consuming external transaction data associated with each transaction, populating preconfigured internal attributes data, and outputting enriched transactions. The publishing module 418 may be configured to publish the enriched transactions onto the pricing orchestrating module 438 for executing a transaction level pricing and balance management algorithm. The consuming module 420 may be configured to consume the enriched transactions.

The identifying module 422 may be configured to identify type of each transaction from the consumed enriched transactions by applying predefined rules; and the executing module 424 may be configured to execute, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

In some embodiments, in identifying type of each transaction, the identifying module may be further configured to identify one or more of the following transactions: credit card transaction; debit card transaction; customer disputing a transaction; customer requesting a change on annual percentage rate; payment transaction; and reversal transaction, but the disclosure is not limited thereto.

In some embodiments, the TLDMM 406 may be further configured to store all transactions with corresponding pricing task execution status onto a database, i.e., database(s) 412.

In some embodiments, the TLDMM 406 may be further configured to store all transaction level updates onto a staging database 413.

In some embodiments, the consuming module 420 may be further configured to consume all debits for promotion qualifications. The applying module 426 may be configured to apply preconfigured promotional rules. The consuming module 420 may be further configured to consume account level promotion identifiers to be used for the promotion qualifications. The evaluating module 424 may be configured to evaluate whether the transaction is eligible for any promotional offer or customer requested offer based on applying preconfigured promotional rules. The creating module 430 may be configured to create a record of promotion data associated with the promotional offer or the customer requested offer along with a transaction key onto a promotional database. The publishing module 418 may be configured to publish, by accessing the promotional database 415, a response indicating promotion qualified "Yes" or "No" back to the pricing orchestrating module 438. The updating module 432 may be configured to update corresponding transaction among the plurality of transactions in correspondence with publishing the response.

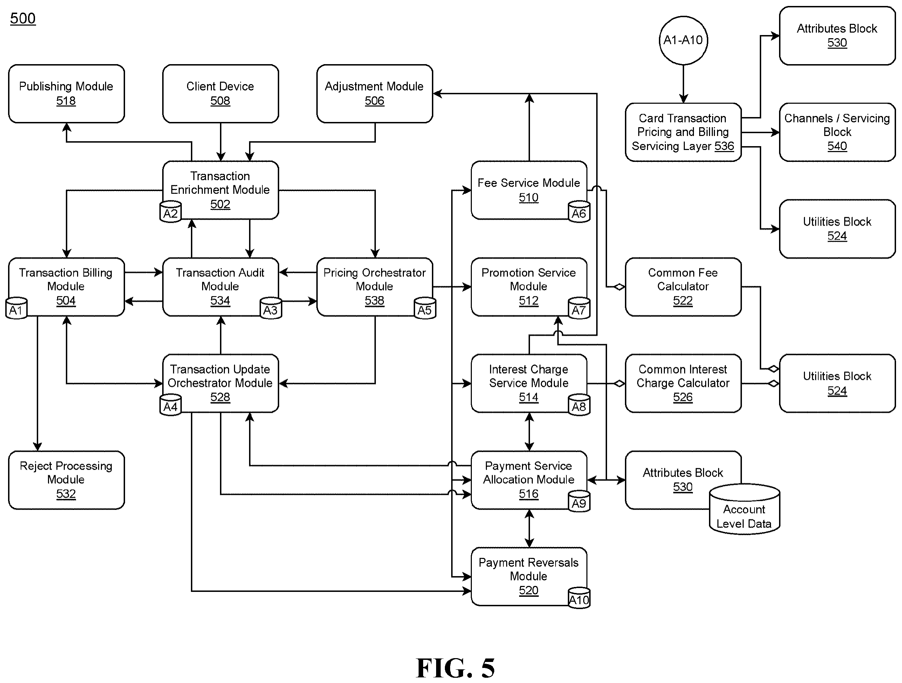

For example, FIG. 5 illustrates an architecture 500 implemented by the TLDMM 406 of FIG. 4 in accordance with an embodiment.

As illustrated in FIG. 5, a transaction enrichment module 502 may be operatively connected (i.e., to transfer and/or receive data) to a transaction billing module 504, a client device 508, an adjustment module 506, a publishing module 518, a transaction audit module 534, a pricing orchestrator module 538 (same or similar to the pricing orchestrating module 438 as illustrated in FIG. 4). The pricing orchestrator module 538 may be operatively connected to a fee service module 510, a promotion service module 512, an interest change service module 514, and a payment service allocation module 516. The fee service module 510 may be operatively connected to the adjustment module 506 and a common fee calculator 522 which may be operatively connected to a utilities block 524. The interest change service module 514 may be operatively connected to the adjustment module 506, the payment service allocation module 516, and a common interest change calculator 526 which may be operatively connected to the utilities block 524. The payment service allocation module 516 may be operatively connected to an attributes block 530, a payment reversals module 520, the interest change service module 514, the transaction update orchestrator module 528, and the adjustment module 506. Output data from the attributes block 530 may be stored and accessed from an account level database. The payment reversals module 520 may be operatively connected to the payment service allocation module 516 and the transaction update orchestrator module 528. The transaction billing module 504 may also be operatively connected to a reject processing module 532.

In some embodiments, each of the module as illustrated in FIG. 5 may be physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies.

In some embodiments, each of the module as illustrated in FIG. 5 may be implemented by microprocessors or similar, and may be programmed using software (e.g., microcode) to perform various functions discussed herein and may optionally be driven by firmware and/or software.

Alternatively, in some embodiments, each of the module as illustrated in FIG. 5 may be implemented by dedicated hardware, or as a combination of dedicated hardware to perform some functions and a processor (e.g., one or more programmed microprocessors and associated circuitry) to perform other functions, but the disclosure is not limited thereto.

In some embodiments, each of the module as illustrated in FIG. 5 may be called via corresponding API, but the disclosure is not limited thereto.

Referring back to FIGS. 4 and 5, implementing the architecture 500 as illustrated in FIG. 5 by the TLDMM 406 of FIG. 4, the following functionalities, but not limited thereto, may be achieved: the Interest charges may be configured at transaction level instead of balance level; interest charges may be calculated and stored at transact level; customer requested rate changes - allowing customers/advisors to request a rate change at transaction level for both posted and future transactions; indefinite balance buckets; any number of promotions may be offered to customers; payments would be allocated to transactions and allocation details would be saved at transaction level; cross cycle backdated payments would be allocated correctly; additional payments would be reallocated during the cross-cycle payment/payment reversal process; payments would be reallocated during the dispute and fee refunds process; interest charges would be calculated correctly while processing disputes, SCRA adjustments, customer requested fee refunds, backdated payments and reversals; eligible history fees only should be refunded during the backdated payment processing; account level fees, e.g., late fees should be assessed if any cycle in the history doesn't meet minimum pay due requirement during the backdated payment reversal processing; transaction level pricing estimates may be serviced to customers; APR corrections may be done on posted transactions; point in time history is available for analytics; accurate minimum payment due calculations; accurate past due calculations, etc.

For example, referring back to FIG. 5, the transaction enrichment module 502 may be configured to consume the external transaction data received from the client device 508 and populates required internal attributes. For example, system of record (SOR) transactions may be stored onto a database A2. The transaction enrichment module 502 may publish the transaction to the publishing module 518 (i.e., rewards, match and flag, fraud transferee, pay float processing for payments). Once enriched, transaction may be published to the transaction billing module 504 to insert into a billing transactions database A1 with posted flag 'No' (pending confirmation from Audit service). The transaction enrichment module 502 may then publish the transaction to the pricing orchestrator module 538 for pricing functions. Once all called services confirms that request has been successfully received, 'success' message may be sent to the transaction audit module 534. Retries may be built in case of any technical issues during the publish/consume. The transaction audit module 534 may maintain a status tracker database A3.

In some embodiments, the pricing orchestrator module 538 may consume the transactions from the transaction enrichment module 502 and publish the transactions to pricing services based on the transaction type. Retries may be done if there are any technical issues. The pricing orchestrator module 538 may maintain a Recon database A5 for all transactions with corresponding pricing task execution status. For example, the pricing orchestrator module 538 may maintain all the transaction level updates in a staging library within the database A5. Once all pricing functions complete, updates may be sent to transaction update orchestrator module 528. If all the services successfully complete success message may be published to the transaction audit module 534. If any failures after allowed number of retries or any data issues or any logic issues, then 'failed' message may be sent to the transaction audit module 534 which may trigger reject and rollback process. In some embodiments, the transaction update orchestrator module 528 may maintain a database A4 for staging.

In some embodiments, the fee service module 510 may consume all debit transaction; publish the transaction to the common fee calculator 522; consume the calculated fee and publish it back to the pricing orchestrator module 538; generate an adjustments in case of transaction level adjustment activity like backdated payment/reversal and disputes. Transaction may be updated with fee charged 'Yes/No'. SOR for fee amount and options may be applied.

In some embodiments, the common fee calculator 522 may calculate transaction level, account level, and product level fees. All the specific fee level rules/options may be built by respective product teams. The common fee calculator 522 may consume the rules and required customer and/or account and/or product and/or transaction data from the corresponding utilities block 524. For example, the utilities block 524 may provide account level data; transaction data; customer level data; card product level features, etc. In case of transaction, common fee calculator 522 may evaluate and if transaction qualify for fee (e.g., cash advance, foreign transaction, balance transfer, etc.) then calculate the fee using the business defined rules and data from utilities. The common fee calculator 522 may then publish the rules applied, data used and fee amount/No fee back to fee service module 510. In some embodiments, the fee service module 510 may maintain a database A6 for storing fee data.

In some embodiments, the promotion service module 512 may consume all debits for promo qualifications. Promotion rules may be built by product teams. The promotion service module 512 may consume the account level promo Ids to be used for qualification; evaluate if the transaction is eligible for any promotional offer or customer requested offer; be SOR for promo data; create a record in the promotional database 415 (see, e.g., FIG. 4) or A7 (for storing promotion data, offers and options), transaction key, and full promotion data; publish the response back to pricing orchestrator module 538. Transaction may be updated with promo qualified 'Yes/No'.

In some embodiments, the interest charge service module 514 may consume all transactions for interest charge (IC) evaluation; and publish transaction to common interest charge calculator 526. If IC calculated (debit/credit), store all the calculation data including rules and account/transaction data onto a database A8. The interest charge service module 514 may be the SOR for IC data and may publish the response back to the pricing orchestrator module 538 with fee charge amount or no fee charge; generate an adjustment transaction for backdated payment/reversal and disputes. ICs may be recalculated every time a payment/payment reversal applied. At the end of the cycle, the interest charge service module 514 may evaluate any change in the rules to be applied to the entire cycle like waivers or cycle date changes.

In some embodiments, the common interest change calculator 526 may calculate interest charges. May be called from Transaction processing, Cycle process, Dispute processing, Promo rebuilds, SCRA retroactive, 25% fee, Refunds initiated from channels, etc. All the Customer level, Product level, Account level, transaction level rules/options for the calculations, discounts, waivers may be built by respective business teams. The common interest change calculator 526 may consume the rules and required Customer and/or Account and/or Product and/or Transaction data from utilities block 524. In case of transaction, the common interest change calculator 526 may check if transaction is eligible for any waivers/discounts and then calculate the IC using rules and account/transaction data and publish the rules applied, data used and IC amount/No IC back to the interest charge service module 514.

In some embodiments, the payment service allocation module 516 may consume payment transactions from the pricing orchestrator module 538. Payment allocation rules may be built by business/product teams. All the posted debit transactions in the order oldest to current with nonzero balances may be consumed and apply the payment as per the allocation rules by the payment service allocation module 516. The payment service allocation module 516 may then update the payments applied flag and remaining transaction amount in the debit transaction; publish the updated transactions to the transaction update orchestrator module 528; store the rules applied and all the impacted transactions with amount applied (i.e., payment allocation data) onto the database A9. Thus, the payment service allocation module 516 may be the SOR for payment allocation data. The payment service allocation module 516 may publish the updated payment transaction back to the pricing orchestrator module 538.

In backdating, the payment service allocation module 516 may reallocate starting from the payment transaction date; and take the original transaction amounts as on that date and allocate the payment. ICs may be recalculated using the history options. Refunds may be posted. If there are any subsequent payments, reallocations may be done till the current date. If there is a credit balance at the end of the history cycle, same may be applied to next cycle transactions. The payment service allocation module 516 may utilize first day of the cycle as the payment transaction date; recalculate minimum payment due and payment dues; and re-evaluate fees and refund if eligible.

In some embodiments, the payment reversals module 520 may consume payment reversal transaction from the pricing orchestrator module 538; consume all the impacted transactions from payment allocation SOR using payment transaction key; reverse the payment in the impacted transactions; update the reversal flag to yes, remaining transaction amount; send the confirmation to pricing orchestrator module 538 that reversal complete and payment reallocations are in progress; consume all the transactions starting from the first day of cycle in which payment transaction date falling in till the current date from billing transactions/transaction update orchestrator module 528; publish all transactions to payment service allocation module 516. The payment service allocation module 516 may reapply any subsequent payments; publish the updated transactions to the transaction update orchestrator module 528; recalculate history of minimum pay, and asses any allowed fees; recalculate interest charges; and recalculate payment dues. The payment reversals module 520 may maintain a database A10 for storing payment reversals data.

In some embodiments, the transaction update orchestrator module 528 may consume the updated transactions from the pricing orchestrator module 538 that includes responses from pricing functions; consume the pending transaction request from the payment service allocation module 516, consume the all the pending transactions (remaining amount > 0) from transaction DB, i.e., databases A1, A4, and publish them back to the payment service allocation module 516. The transaction update orchestrator module 528 may consume the impacted transaction request from the payment reversal service allocation module 516; consume the all the impacted and pending transactions (remaining amount > 0) from transaction DB and publish them back to payment reversal service allocation module 516; consume the updated transactions from payment service allocation module 516 in case of backdating; publish the updated transactions to transaction date service; send the success/failure flag to the transaction audit module 534.

In some embodiments, the transaction billing module 504 may consume the transactions from the transaction enrichment module 502 and the transaction update orchestrator module 528 and insert them into the transaction DB with posted flag as 'No'; consume the confirmation from the transaction audit module 534 to flip the posted flag to 'Yes'; publish posted unpaid transactions to the transaction update orchestrator module 528 for payment allocations; publish impacted and posted unpaid transactions to transaction update orchestrator module 528 for reversal and subsequent payment processing.

In some embodiments, the transaction audit module 534 may consume success confirmation from the transaction enrichment module 502, pricing orchestrator module 538 and transaction update orchestrator module 528. If all are success, then the transaction audit module 534 may issue a command to the transaction billing module 504 to mark the transactions as posted 'Yes'. If any service failed to process after required retries or any data issues, then the transaction audit module 534 may issue a command to the transaction billing module 504 to reject the transaction and to other orchestrator services to delete the transaction. The pricing orchestrator module 538 may publish the save/delete instruction to pricing services, i.e., pricing orchestrator module 538.

As illustrated in FIG. 5, a card transaction pricing and billing servicing layer 536 may be operatively connected to an attributes block 530, channels/servicing block 540, and the utilities block 524. All the databases A1-A10 as discussed above, may provide date to this card transaction pricing and billing servicing layer 536. The attributes block 530 may include data related to minimum pay due calculations, interest charge exclusions, past due, statement, extracts for analytics and other clients, etc., but the disclosure is not limited thereto.

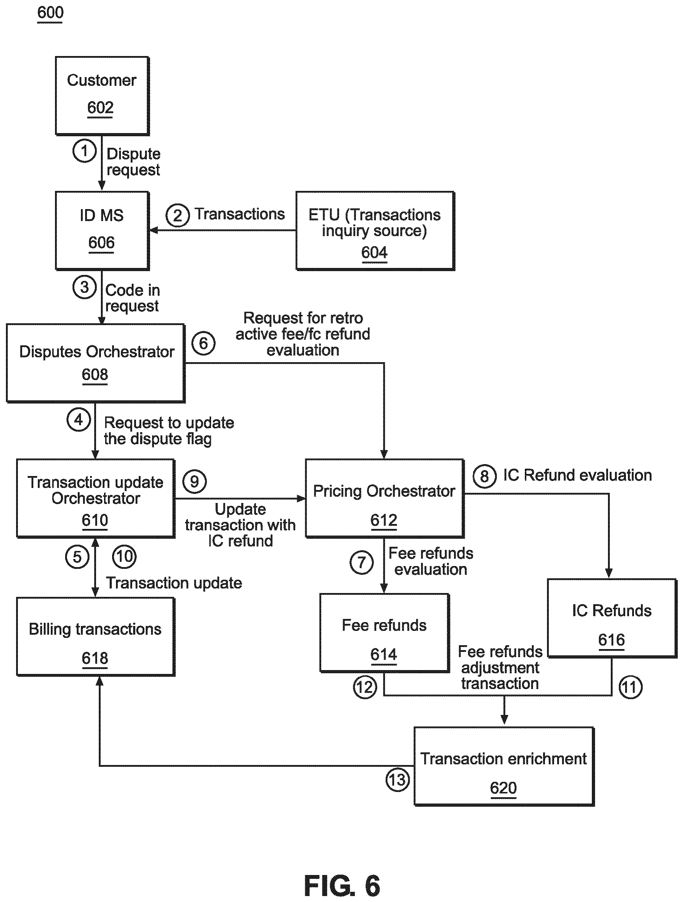

FIG. 6 illustrates an exemplary flow diagram 600 of disputes resolution as implemented by the TLDMM 406 of FIG. 4 in accordance with an embodiment. As illustrated in FIG. 6, at step 1, a customer 602 may submit a request to dispute a certain transaction or interest charge associated with the transaction. This request by be received by ID MS 606. At step 2, the ID MS 606 may receive the transactions from ETU (transactions inquiry source) 604. At step 3, the ID MS 606 may transfer a code in request to a disputes orchestrator 608. At step 4, the dispute orchestrator 608 may request to update the dispute flag. The transaction update orchestrator 610 may receive the request from the disputes orchestrator 608. At step 5, transaction update may be sent from the transaction update orchestrator 610 to billing transactions 618 block. At step 6, the disputes orchestrator 608 may request for retroactive fee or fee charge refund evaluation to a pricing orchestrator 612. At step 7, the pricing orchestrator 612 may transmit any fee refund evaluation to fee refunds 614 block. At step 8, interest charge refund evaluation may be sent to the interest charge refunds 616 block. At step 9, the pricing orchestrator 612 may bi-directionally transfer data to the transaction update orchestrator 610. At step 10, the transaction update orchestrator 610 may transfer transaction update to the billing transactions 618 block. At step 11, the interest charge refunds 616 block may submit fee refund adjustment transaction to the transaction enrichment 620 block. At step 12, the fee refunds 614 block may also submit fee refund adjustment transaction to the transaction enrichment 620 block. And at step 13, the transaction enrichment 620 block transmits all adjustments to the billing transactions 618 block.

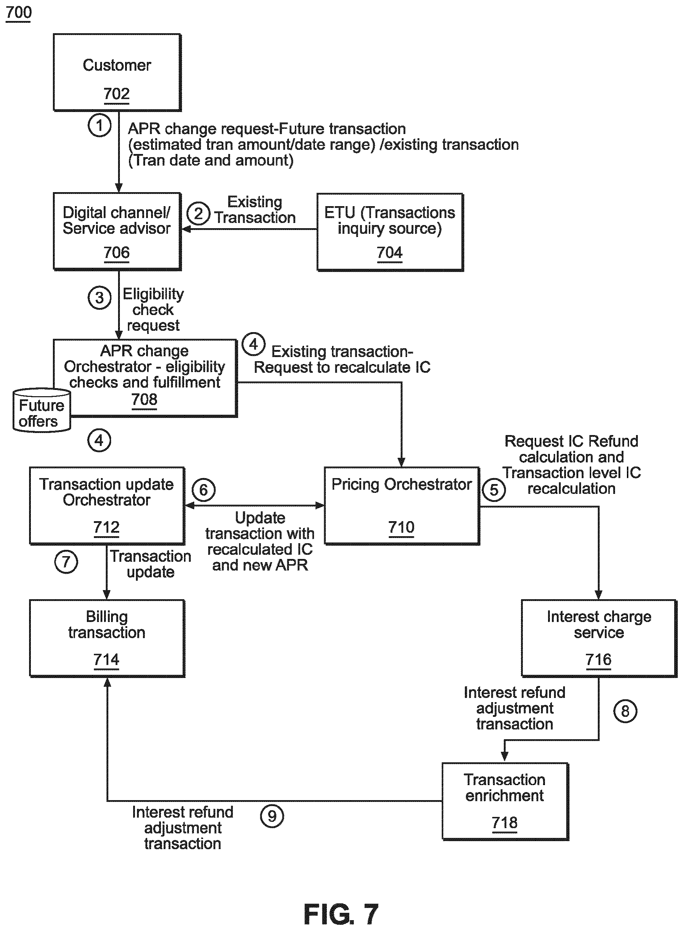

FIG. 7 illustrates an exemplary flow diagram 700 of requesting APR change as implemented by the TLDMM 406 of FIG. 4 in accordance with an embodiment. As illustrated in FIG. 7, at step 1, a customer 702 may submit a request for APR change. This request by be received by a digital channel/service advisor 706. At step 2, the digital channel/service advisor 706 may receive existing transactions from ETU (transactions inquiry source) 704. At step 3, the digital channel/service advisor 706 may transfer eligibility check request to an APR change orchestrator 708 for performing eligibility checks and fulfillment. The APR change orchestrator 708 may maintain a database for future offers. At step 4, the APR change orchestrator 708 may request to recalculate interest charge for existing transactions from a pricing orchestrator 710. At step 5, the pricing orchestrator 710 may request interest charge refund calculation and transaction level interest charge recalculation from an interest charge service 716. At step 6, the pricing orchestrator 710 may bi-directionally transfer data (update transaction with recalculated interest charge and new APR) to the transaction update orchestrator 712. At step 7, the transaction update orchestrator 712 may send the transaction update to the billing transactions 714 block. At step 8, the interest charge service 716 may transfer interest refund adjustment transaction to the transaction enrichment 718 block. And at step 9, the transaction enrichment 718 block may transfer interest refund adjustment transaction to the billing transactions 714 block.

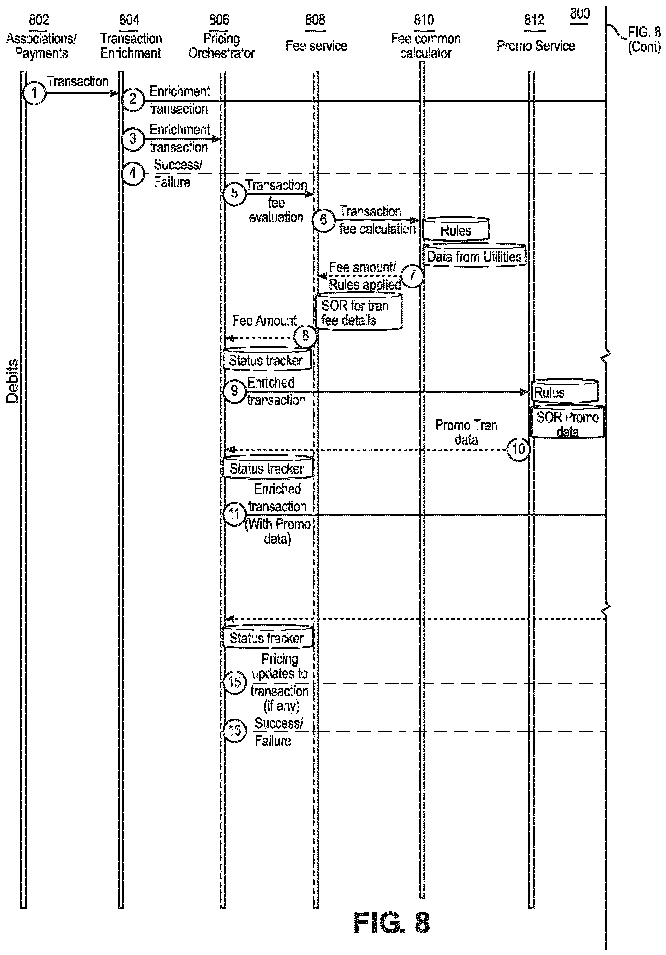

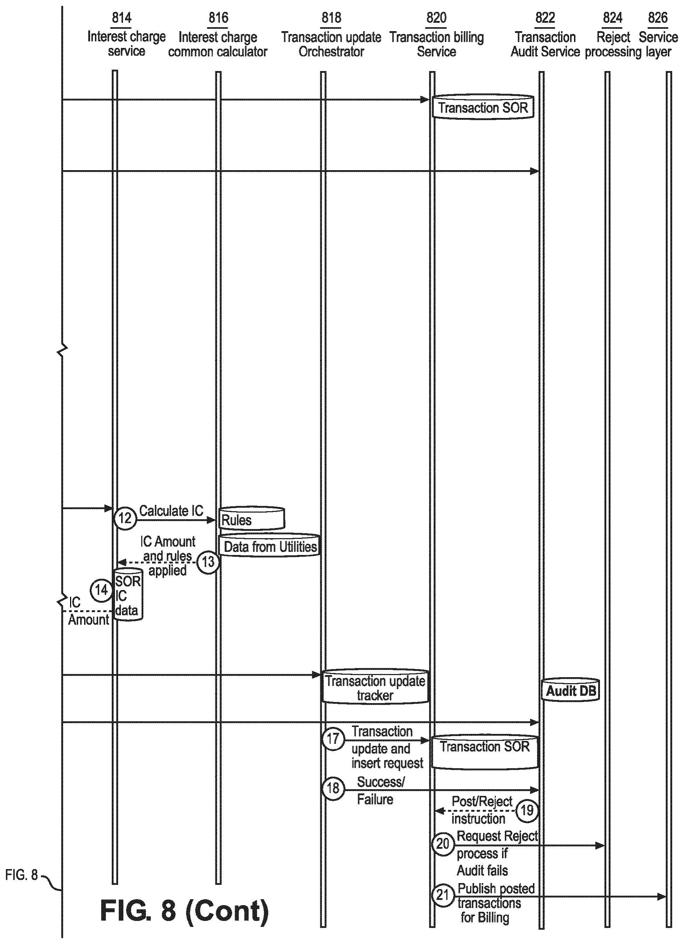

FIG. 8 illustrates an exemplary process 800 of debits transaction as implemented by the TLDMM 406 of FIG. 4 in accordance with an embodiment. At step 1, transaction from associations/payments block 802 may be sent to transaction enrichment 804. At step 2, the transaction enrichment 804 may send the enriched transaction to the transaction billing service 820. At step 3, the transaction enrichment 804 may send the enriched transaction to the pricing orchestrator 806. At step 4, the transaction enrichment 804 may send success or failure data to the transaction audit service 822. At step 5, the pricing orchestrator 806 may send transaction fee evaluation data to the fee service 808. At step 6, the fee service 808 may send the transaction fee calculation data to the fee common calculator 810. At step 7, the fee common calculator 810 may send fee amount / rules applied data to the fee service 808. At step 8, the fee service 808 may send the fee amount data to the pricing orchestrator 806. At step 9, the pricing orchestrator 806 may send the enriched transaction data to the promo service 812. At step 10, the promo service 812 may send promo transaction data to the pricing orchestrator. At step 11, the pricing orchestrator 806 may send enriched transaction with promo data to the interest charge service 814. Ay step 12, the interest charge service814 may send calculate IC data to the interest charge common calculator 816. At step 13, the interest charge common calculator 816 may send IC amount and rules applied data to the interest charge service 814. At step 14, the interest charge service 814 may send IC amount data to the pricing orchestrator 806. At step 15, the pricing orchestrator 806 may send pricing updates to transaction data to the transaction update orchestrator 818. At step 16, the pricing orchestrator may send success or failure data to the transaction audit service 822. At step 17, the transaction update orchestrator 818 may send transaction update and insert request data to the transaction billing service 820. At step 18, the transaction update orchestrator 818 may send success or failure data to the transaction audit service 822. At step 19, the transaction audit service 822 may send post or reject instruction data to the transaction billing service 820. At step 20, the transaction billing service 820 may send request reject process if audit fails data to the reject processing 824. At step 21, the transaction billing service 820 may send publish posted transactions for billing data to the service layer 826.

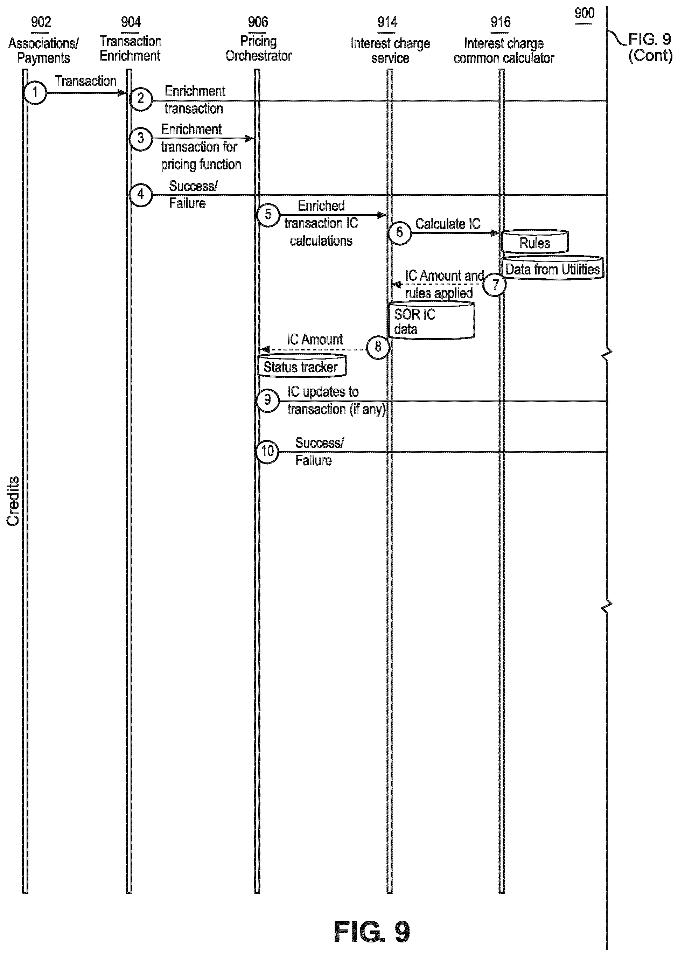

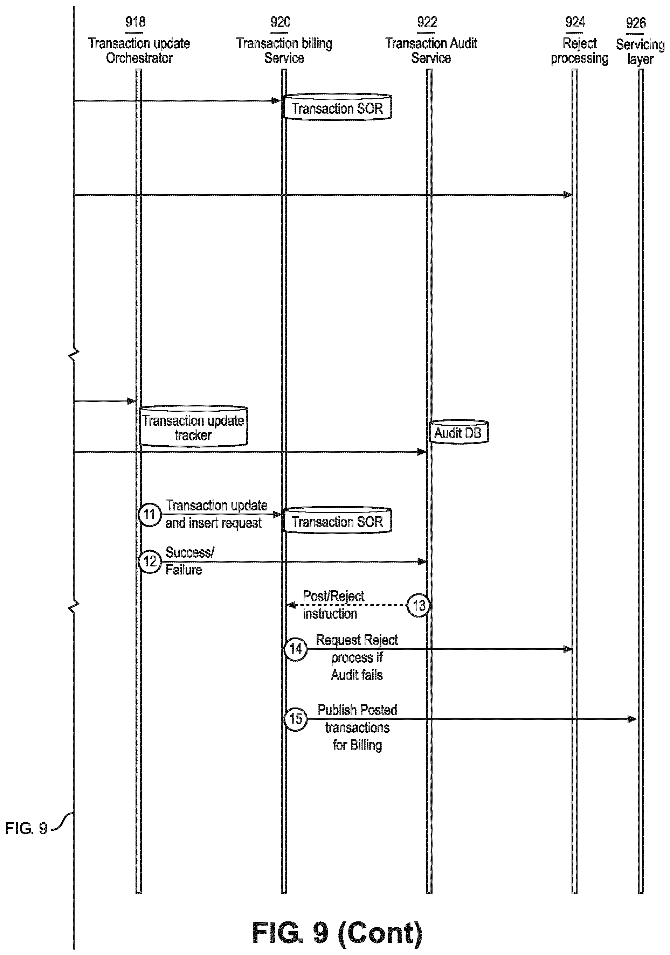

FIG. 9 illustrates an exemplary process 900 of credits transaction as implemented by the TLDMM 406 of FIG. 4 in accordance with an embodiment. At step 1, the associations / payments block 902 may send transaction data to the transaction enrichment 904. At step 2, the transaction enrichment 904 may send enriched transaction data to the transaction billing service 920. At step 3, the transaction enrichment 904 may send enriched transaction for pricing as functions data to the pricing orchestrator 906. At step 4, the transaction enrichment 904 may send success or failure data to the transaction audit service 922. At step 5, the pricing orchestrator 906 may send enriched transaction IC calculations data to the interest charge service 914. At step 6, the interest charge service 914 may send calculate IC data to the interest charge common calculator 916. At step 7, the interest charge common calculator 916 may send IC amount and rules applied data to the interest charge service 914. At step 8, the interest charge service 914 may send IC amount data to the pricing orchestrator 906. At step 9, the pricing orchestrator 906 may send IC updates to transaction data to the transaction update orchestrator 918. At step 10, the pricing orchestrator 906 may send success or failure data to the transaction audit service 922. At step 11, the transaction update orchestrator 906 may send transaction update and insert request data to the transaction billing service 920. At step 12, the transaction update orchestrator 918 may send success or failure data to the transaction audit service 922. At step 13, the transaction audit service 922 may send post or reject instruction data to the transaction billing service 920. At step 14, the transaction billing service 920 may send request reject process if audit fails data to the reject processing 924. At step 15, the transaction billing service 920 may send publish posted transactions for billing data to the servicing layer 926.

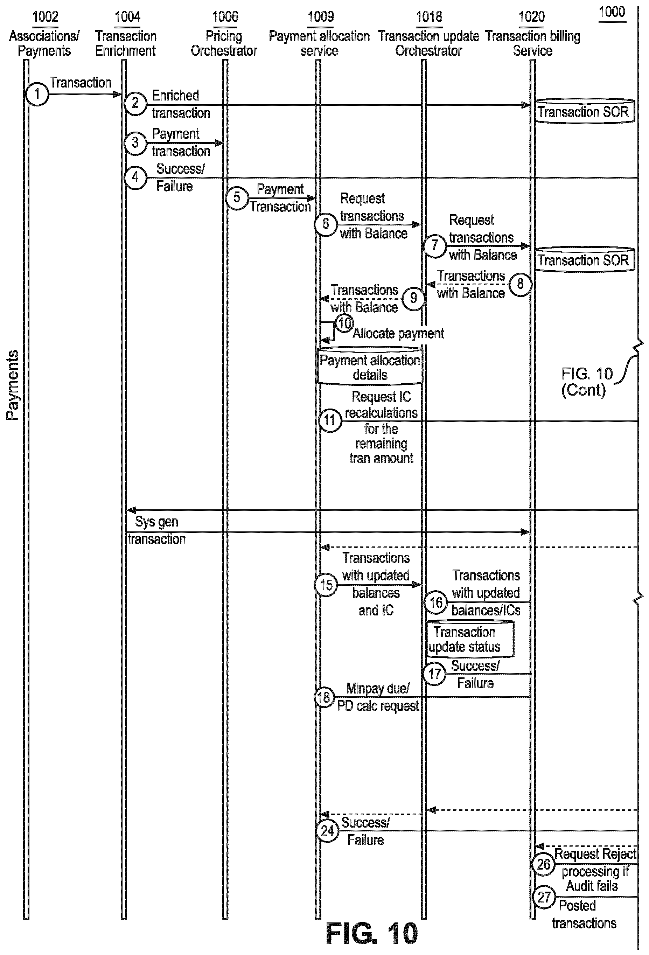

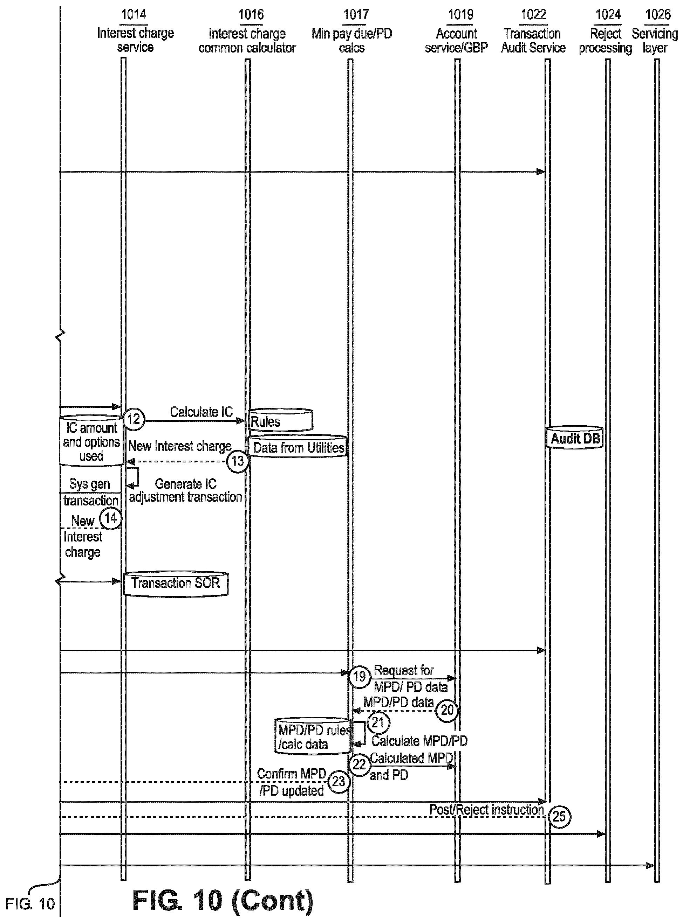

FIG. 10 illustrates an exemplary process 1000 of payments transaction as implemented by the TLDMM 406 of FIG. 4 in accordance with an embodiment. At step 1, the associations / payments block 1002 may send transaction data to the transaction enrichment 1004. At step 2, the transaction enrichment 1004 may send enriched transaction data to the transaction billing service 1020. At step 3, the transaction enrichment 1004 may send payment transaction data to the pricing orchestrator 1006. At step 4, the transaction enrichment 1004 may send success or failure data to the transaction audit service 1022. At step 5, the pricing orchestrator 1006 may send payment transaction data tot eh payment allocation service 1009. At step 6, the payment allocation service 1009 may send request transactions with balance data to the transaction update orchestrator 1018. At step 7, the transaction update orchestrator 1018 may send request transaction with balance data to the transaction billing service 1020. At step 9, the transaction billing service 1020 may send transaction with balance data to the transaction update orchestrator 1018. The transaction update orchestrator 1018 may send transactions with balance data to the payment allocation service 1009. At step 10, the payment allocation service 1009 may send allocate payment data to the payment allocation service 1009. At step 11, the payment allocation service 1009 may send request IC recalculations for the remaining transaction amount data to the interest charge service 1014. At step 12, the interest charge service 1014 may send calculate IC data to the interest charge common calculator 1016. At step 13, the interest charge common calculator 1016 may send new interest charge data to the interest charge service 1014. The interest charge service 1014 may send generate IC adjustment transaction data to the interest charge service 1014. The interest charge service 1014 may send system generated transaction data to the transaction enrichment 1004. The transaction enrichment 1004 may send system generated transaction data to the transaction billing service 1020. At step 14, the interest charge service 1014 may send new interest charge data to the payment allocation service 1009. At step 15, the payment allocation service 1009 may send transaction with updated balances and IC data to the transaction update orchestrator 1018. At step 16, the transaction update orchestrator 1018 may send transactions with updates balances / ICs to the transaction billing service 1020. At step 17, the transaction update orchestrator 1018 may send success or failure data to the transaction audit service 1022. At step 18, the payment allocation service 1009 may send minimum pay (min pay) due or PD (payment due) calculation (hereinafter, PD calc) request to the min pay due / PD calcs 1017. At step 19, the min pay due / PD calcs 1017 may send request for MPD (minimum payment due) / PD data to the account services / GBP 1019. At step 20, the account service / GBP 1019 may send MPD / PD data to the min pay due / PD calcs 1017. At step 21, the min pay due / PD calcs 1017 may send calculate MPD / PD data to the min pay due / PD calcs 1017. At step 22, the min pay due / PD calcs 1017 may send calculated MPD and PD data to the account services / GBP 1019. At step 23, the min pay due / PD calcs 1017 may send confirm MPD / PD updated data to the payment allocation service 1009. The payment allocation service 1009 may send conform MPD / PD updated data to the pricing orchestrator 1006. At step 24, the pricing orchestrator may send success or failure data to the transaction audit service 1022. At step 25, the transaction audit service 1022 may send post or reject instruction data to the transaction billing service 1020. At step 26, the transaction billing service 1020 may send request reject processing if audit fails data to the reject processing 1024. At step 27, the transaction billing service 1020 may send posted transactions data to the servicing layer 1026.

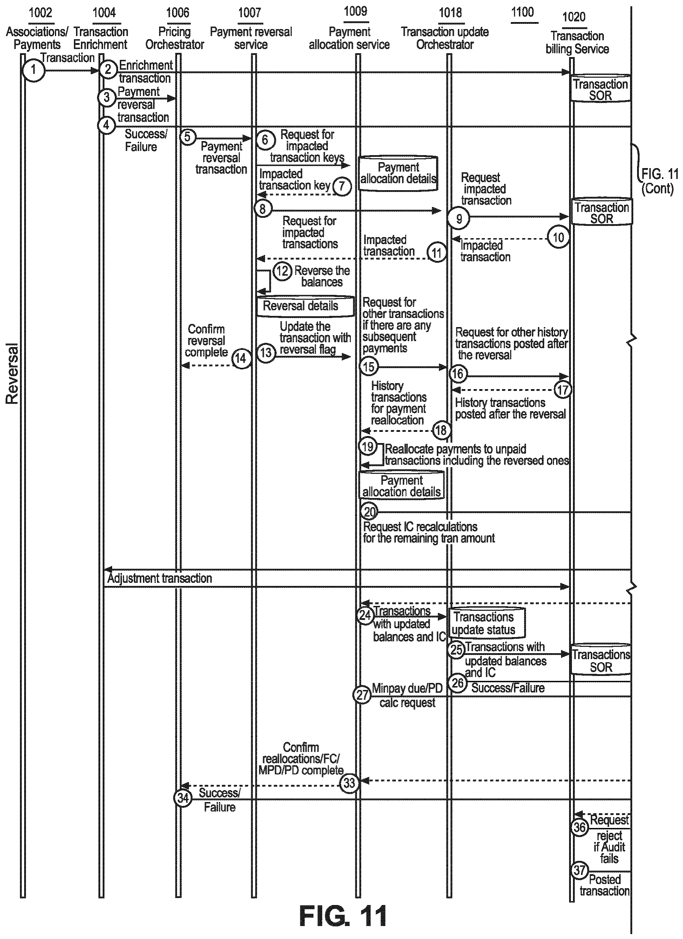

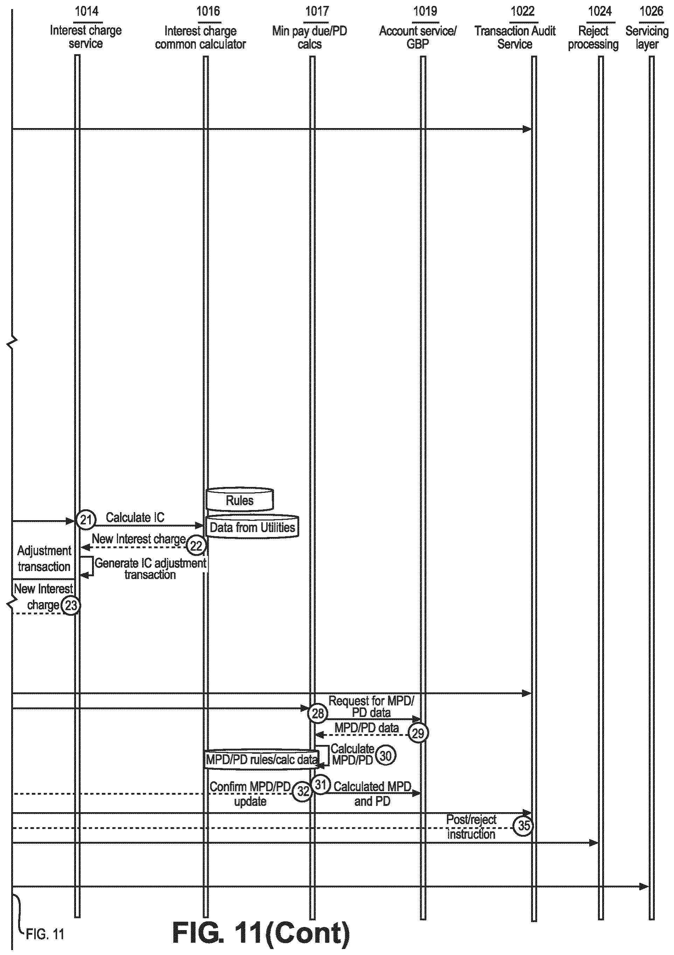

FIG. 11 illustrates an exemplary process 1100 of reversal transaction as implemented by the TLDMM 406 of FIG. 4 in accordance with an embodiment. At step 1, the associations / payments block 1102 may send transaction data to the transaction enrichment 1104. At step 2, the transaction enrichment 1104 may send enriched transaction data the transaction billing service 1120. At step 3, the transaction enrichment 1104 may send payment reversal transaction data to the pricing orchestrator 1106. At step 4, the transaction enrichment 1104 may send success or failure data to the transaction audit service 1122. At step 5, the pricing orchestrator 1106 may send payment reversal transaction data to the payment reversal service 1107. At step 6, the payment reversal service may send request for impacted transaction keys data to the payment allocation service 1109. At step 7, the payment allocation service 1109 may send impacted transaction keys data to the payment reversal service 1107. At step 8, the payment reversal service 1107 may send request for impacted transactions data to the transaction update orchestrator 1118. At step 9, the transaction update orchestrator 1118 may send request for impacted transactions data to the transaction billing service 1120. At step 10, the transaction billing service 1120 may send impacted transactions data to the transaction updates orchestrator 1118. At step 11, the transactions update orchestrator 1118 may send impacted transactions to the payment reversal service 1107. At step 12, the payment reversal service 1107 may send reverse the balances data to the payment reversal service 1107. At step 13, the payment reversal service 1107 may send update the transaction with reversal flag data to the payment allocation service 1109. At step 14, the payment reversal service 1107 may send confirm reversal complete data to the pricing orchestrator 1106. At step 15, the payment allocation service 1109 may send request for other transactions if there are any subsequent payments data to the transaction update orchestrator 1118. At step 16, the transaction update orchestrator 1118 may send request for other history transaction posted after the reversal data to the transaction billing service 1120. At step 17, the transaction billing service 1120 may send history transactions posted after the reversal data to the transaction update orchestrator 1118. At step 18, the transaction update orchestrator 1118 may send history transactions for payment reallocation data to the payment allocation service 1109. At step 19, the payment allocation service 1109 may send reallocate payments to unpaid transactions including the reversed ones data to the payment allocation service 1109. At step 20, the payment allocation service 1109 may send request IC recalculations for the remaining transaction amount data to the interest charge service 1114. At step 21, the interest charge service 1114 may send calculate IC data to the interest charge common calculator 1116. At step 22, the interest charge common calculator 1116 may send new interest charge data to the interest charge service 1114. The interest charge service 1114 may send generate IC adjustment transaction data to the interest charge service 1114. The interest charge service 1114 may send adjustment transaction data to the transaction enrichment 1104. The transaction enrichment 1104 may send adjustment transaction data to the transaction billing service 1120. At step 23, the interest charge service 1114 may send new interest charge data to the payment allocation service 1109. At step 24, the payment allocation service 1109 may send transactions with updated balances and IC data to the transaction update orchestrator 1118. At step 25, the transaction update orchestrator 1118 may send transactions with updated balances and IC data to the transaction billing service 1120. At step 26, the transaction update orchestrator 1118 may send success or failure data to the transaction audit service 1122. At step 27, the payment allocation service 1109 may send minimum pay (min pay) due / PD calc request data to the min pay due / PD calcs 1117. At step 28, the min pay due / PD calcs 1117 may send request for MPD / PD data to the account services / GBP 1119. At step 29, the account services / GBP 1119 may send MPD / PD data to the min pay due / PD calcs 1117. At step 30, the min pay due / PD calcs 1117 may send calculate MPD / PD data to the min pay due / PD calcs 1117. At step 31, the min pay due / PD cales 1117 may send calculated MPD and PD data to the account services /GBP 1119. At step 32, the min pay due / PD calcs 1117 may send confirm MPD / PD updated data to the payment allocation service 1109. At step 33, the payment allocation service 1109 may send confirm reallocations / FC / MPD / PD complete data to the pricing orchestrator 1106. At step 34, the pricing orchestrator 1109 may send success or failure data to the transaction audit service 1122. At step 35, the transaction audit service 1122 may send post or reject instruction data to the transaction billing service 1120. At step 36, the transaction billing service 1120 may send request reject if audit fails data to the reject processing 1124. At step 37, the transaction billing service 1120 may send posted transaction data to the servicing layer 1126.

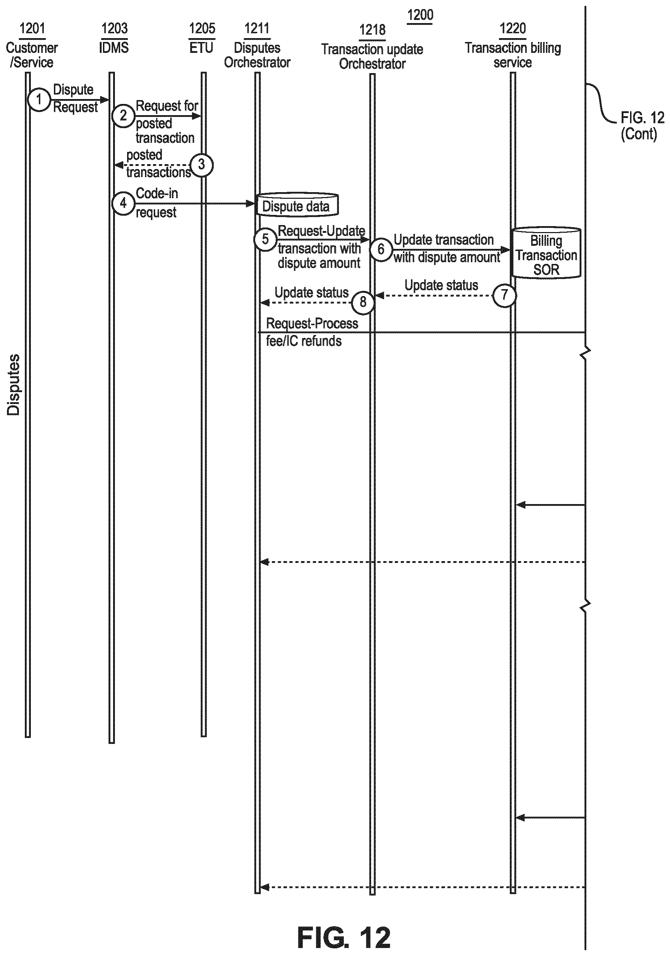

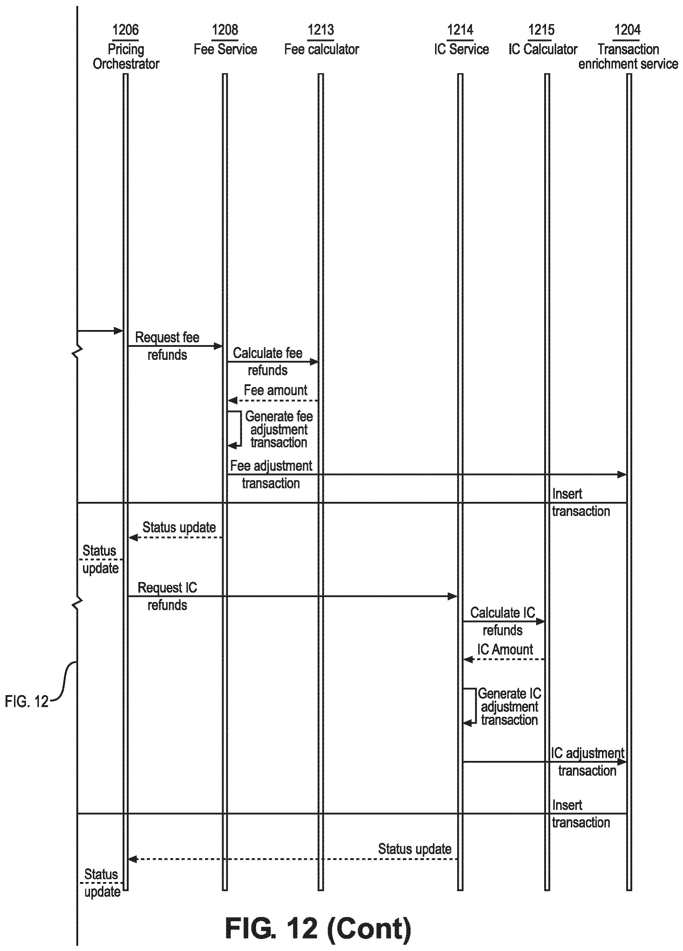

FIG. 12 illustrates an exemplary process 1200 of disputes transaction as implemented by the platform, language, database, and cloud agnostic transaction level data management module of FIG. 4 in accordance with an embodiment. At step 1, the customer / service 1201 may send dispute request data to the IDMS 1203. At step 2, the IDMS may send request for posted transaction data to the ETU 1205. At step 3, the ETU may send posted transactions data to the IDMS 1203. At step 4, the IDMS may send code-in request data to the disputes orchestrator 1211. At step 5, the disputes orchestrator 1211 my send request update transaction with dispute amount data to the transaction update orchestrator 1218. At step 6, the transaction update orchestrator 1218 may send update transaction with dispute amount data to the transaction billing service 1220. At step 7, the transaction billing service 1220 may send update status data to the transaction update orchestrator 1218. At step 8, the transaction update orchestrator 1218 may send update status data to the disputes orchestrator 1211. Subsequently, the disputes orchestrator 1211 may send request process fee / IC refunds data to the pricing orchestrator 1206. Subsequently, the pricing orchestrator 1206 may send request fee refunds data to the fee service 1208. Subsequently, the fee service 1208 may send calculate fee refunds data to the fee calculator 1213. Subsequently, the fee calculator may send the fee amount to the fee service 1208. Subsequently, the fee service 1208 may send generate fee adjustment transaction data to the fee service 1208. Subsequently, the fee service 1208 may send fee adjustment transaction data to the transaction enrichment service 1204. Subsequently, the transaction enrichment service 1204 may send insert transaction data to the transaction billing service 1220. Subsequently, the fee service 1208 may send status update data to the pricing orchestrator 1206. Subsequently, the pricing orchestrator 1206 may send status update data to the disputes orchestrator 1211. Subsequently, the pricing orchestrator 1206 may send request IC refunds data to the IC service 1214. Subsequently, the IC service 1214 may send calculate IC refunds data to the IC calculator 1215. Subsequently, the IC calculator 1215 may send IC amount data to the IC service 1214. The IC service 1214 may send generate IC adjustment transactions data to the IC service 1214. Subsequently, the IC service 1214 may send IC adjustment transaction data to the transaction enrichment service 1204. Subsequently, the transaction enrichment service 1204 may send insert transaction data to the transaction billing service 1220. Subsequently, the IC service 1214 may send status update data to the pricing orchestrator 1206. Subsequently, the pricing orchestrator may send status update data to the disputes orchestrator 1211.

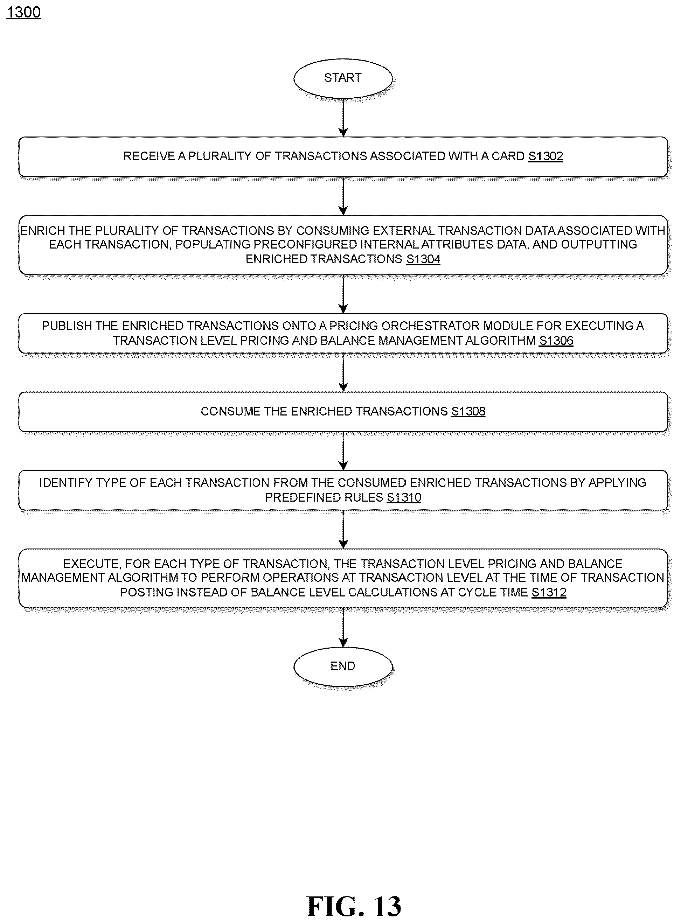

FIG. 13 illustrates an exemplary flow chart of a process 1300 implemented by the platform, language, database, and cloud agnostic TLDMM 406 of FIG. 4 for card transaction level pricing and balance management in accordance with an embodiment. It may be appreciated that the illustrated process 1300 and associated steps may be performed in a different order, with illustrated steps omitted, with additional steps added, or with a combination of reordered, combined, omitted, or additional steps.

As illustrated in FIG. 13, at step S1302, the process 1300 may include receiving a plurality of transactions associated with a card (i.e., a credit card or a debit card).

At step S1304, the process 1300 may include enriching the plurality of transactions by consuming external transaction data associated with each transaction, populating preconfigured internal attributes data, and outputting enriched transactions.

At step S1306, the process 1300 may include publishing the enriched transactions onto a pricing orchestrator module for executing a transaction level pricing and balance management algorithm.

At step S1308, the process 1300 may include consuming the enriched transactions.

At step S1310, the process 1300 may include identifying type of each transaction from the consumed enriched transactions by applying predefined rules.

At step S1312, the process 1300 may include executing, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

In some embodiments, in the process 1300 the accumulated balance level may include purchase, cash, and promotions, but the disclosure is not limited thereto.

In some embodiments, in identifying type of each transaction, the process 1300 may further include: identifying one or more of the following transactions: credit card transaction; debit card transaction; customer disputing a transaction; customer requesting a change on annual percentage rate; payment transaction; and reversal transaction.

In some embodiments, the process 1300 may further include: storing all transactions with corresponding pricing task execution status onto a database.

In some embodiments, the process 1300 may further include: storing all transaction level updates onto a staging database.

In some embodiments, the process 1300 may further include: consuming all debits for promotion qualifications; applying preconfigured promotional rules; consuming account level promotion identifiers to be used for the promotion qualifications; evaluating whether the transaction is eligible for any promotional offer or customer requested offer based on applying preconfigured promotional rules; creating a record of promotion data associated with the promotional offer or the customer requested offer along with a transaction key onto a promotional database; publishing, by accessing the promotional database, a response indicating promotion qualified "Yes" or "No" back to the pricing orchestrator module; and updating corresponding transaction among the plurality of transactions in correspondence with publishing the response.

In some embodiments, the TLDMD 402 may include a memory (e.g., a memory 106 as illustrated in FIG. 1) which may be a non-transitory computer readable medium that may be configured to store instructions for implementing a platform, language, database, and cloud agnostic TLDMM 406 for transaction level pricing and balance management as disclosed herein. The TLDMD 402 may also include a medium reader (e.g., a medium reader 112 as illustrated in FIG. 1) which may be configured to read any one or more sets of instructions, e.g., software, from any of the memories described herein. The instructions, when executed by a processor embedded within the TLDMM 406 or within the TLDMD 402, may be used to perform one or more of the methods and processes as described herein. In a particular embodiment, the instructions may reside completely, or at least partially, within the memory 106, the medium reader 112, and/or the processor 104 (see FIG. 1) during execution by the TLDMD 402.

In some embodiments, the instructions, when executed, may cause a processor embedded within the TLDMM 406 or the TLDMD 402 to perform the following: receiving a plurality of transactions associated with a card; enriching the plurality of transactions by consuming external transaction data associated with each transaction, populating preconfigured internal attributes data, and outputting enriched transactions; publishing the enriched transactions onto a pricing orchestrator module for executing a transaction level pricing and balance management algorithm; consuming the enriched transactions; identifying type of each transaction from the consumed enriched transactions by applying predefined rules; and executing, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level, but the disclosure is not limited thereto. In some embodiments, the processor may be the same or similar to the processor 104 as illustrated in FIG. 1 or the processor embedded within the TLDMD 202, TLDMD 302, TLDMD 402, and TLDMM 406 which is the same or similar to the processor 104.

In some embodiments, in identifying type of each transaction, the instructions, when executed, may cause the processor 104 to further perform the following: identifying one or more of the following transactions: credit card transaction; debit card transaction; customer disputing a transaction; customer requesting a change on annual percentage rate; payment transaction; and reversal transaction.

In some embodiments, the instructions, when executed, may cause the processor 104 to further perform the following: storing all transactions with corresponding pricing task execution status onto a database.

In some embodiments, the instructions, when executed, may cause the processor 104 to further perform the following: storing all transaction level updates onto a staging database.

In some embodiments, the instructions, when executed, may cause the processor 104 to further perform the following: consuming all debits for promotion qualifications; applying preconfigured promotional rules; consuming account level promotion identifiers to be used for the promotion qualifications; evaluating whether the transaction is eligible for any promotional offer or customer requested offer based on applying preconfigured promotional rules; creating a record of promotion data associated with the promotional offer or the customer requested offer along with a transaction key onto a promotional database; publishing, by accessing the promotional database, a response indicating promotion qualified "Yes" or "No" back to the pricing orchestrator module; and updating corresponding transaction among the plurality of transactions in correspondence with publishing the response.

In some embodiments as disclosed above in FIGS. 1-13, technical improvements effected by the instant disclosure may include a platform for implementing a platform, language, database, and cloud agnostic transaction level data management module configured for card transaction level pricing and balance management, thereby allowing accurate interest charge calculations, removal of number of balance bucket limitations, accurate payment allocations, split cycle interest charge calculations, and service a customer with point in time estimated fees/interest charges, but the disclosure is not limited thereto. Therefore, users can instantly gain insight into hallucination probability and revise a query accordingly.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the present disclosure in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

For example, while the computer-readable medium may be described as a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the embodiments disclosed herein.

The computer-readable medium may comprise a non-transitory computer-readable medium or media and/or comprise a transitory computer-readable medium or media. In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present application describes specific embodiments which may be implemented as computer programs or code segments in computer-readable media, it is to be understood that dedicated hardware implementations, such as application specific integrated circuits, programmable logic arrays and other hardware devices, can be constructed to implement one or more of the embodiments described herein. Applications that may include the various embodiments set forth herein may broadly include a variety of electronic and computer systems. Accordingly, the present application may encompass software, firmware, and hardware implementations, or combinations thereof. Nothing in the present application should be interpreted as being implemented or implementable solely with software and not hardware.

Although the present specification describes components and functions that may be implemented in particular embodiments with reference to particular standards and protocols, the disclosure is not limited to such standards and protocols. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, may be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A method for transaction level pricing and balance management by utilizing one or more processors along with allocated memory, the method comprising:
receiving a plurality of transactions associated with a card;
enriching the plurality of transactions by consuming external transaction data associated with each transaction, populating preconfigured internal attributes data, and outputting enriched transactions;
publishing the enriched transactions onto a pricing orchestrator module for executing a transaction level pricing and balance management algorithm;
consuming the enriched transactions;
identifying type of each transaction from the consumed enriched transactions by applying predefined rules; and
executing, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

2. The method according to claim 1, wherein the card is a credit card or a debit card.

3. The method according to claim 1, wherein the accumulated balance level includes purchase, cash, and promotions.

4. The method according to claim 1, wherein in identifying type of each transaction, the method further comprising:
identifying one or more of the following transactions: credit card transaction; debit card transaction; customer disputing a transaction; customer requesting a change on annual percentage rate; payment transaction; and reversal transaction.

5. The method according to claim 1, further comprising:
storing all transactions with corresponding pricing task execution status onto a database.

6. The method according to claim 1, further comprising:
storing all transaction level updates onto a staging database.

7. The method according to claim 1, further comprising:
consuming all debits for promotion qualifications;
applying preconfigured promotional rules;
consuming account level promotion identifiers to be used for the promotion qualifications;
evaluating whether the transaction is eligible for any promotional offer or customer requested offer based on applying preconfigured promotional rules;
creating a record of promotion data associated with the promotional offer or the customer requested offer along with a transaction key onto a promotional database;
publishing, by accessing the promotional database, a response indicating promotion qualified "Yes" or "No" back to the pricing orchestrator module; and
updating corresponding transaction among the plurality of transactions in correspondence with publishing the response.

8. A system for transaction level pricing and balance management, the system comprising:
a processor; and
a memory operatively connected to the processor via a communication interface, the memory storing computer readable instructions, when executed, causes the processor to:
receive a plurality of transactions associated with a card;
enrich the plurality of transactions by consuming external transaction data associated with each transaction, populating preconfigured internal attributes data, and outputting enriched transactions;
publish the enriched transactions onto a pricing orchestrator module for executing a transaction level pricing and balance management algorithm;
consume the enriched transactions;
identify type of each transaction from the consumed enriched transactions by applying predefined rules; and
execute, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

9. The system according to claim 8, wherein the card is a credit card or a debit card.

10. The system according to claim 8, wherein the accumulated balance level includes purchase, cash, and promotions.

11. The system according to claim 8, in identifying type of each transaction, the processor is further configured to:
identify one or more of the following transactions: credit card transaction; debit card transaction; customer disputing a transaction; customer requesting a change on annual percentage rate; payment transaction; and reversal transaction.

12. The system according to claim 8, wherein the processor is further configured to:
store all transactions with corresponding pricing task execution status onto a database.

13. The system according to claim 8, wherein the processor is further configured to:
store all transaction level updates onto a staging database.

14. The system according to claim 8, wherein the processor is further configured to:
consume all debits for promotion qualifications;
apply preconfigured promotional rules;
consume account level promotion identifiers to be used for the promotion qualifications;
evaluate whether the transaction is eligible for any promotional offer or customer requested offer based on applying preconfigured promotional rules;
create a record of promotion data associated with the promotional offer or the customer requested offer along with a transaction key onto a promotional database;
publish, by accessing the promotional database, a response indicating promotion qualified "Yes" or "No" back to the pricing orchestrator module; and
update corresponding transaction among the plurality of transactions in correspondence with publishing the response.

15. A non-transitory computer readable medium configured to store instructions for transaction level pricing and balance management, the instructions, when executed, cause a processor to perform the following:
receiving a plurality of transactions associated with a card;
enriching the plurality of transactions by consuming external transaction data associated with each transaction, populating preconfigured internal attributes data, and outputting enriched transactions;
publishing the enriched transactions onto a pricing orchestrator module for executing a transaction level pricing and balance management algorithm;
consuming the enriched transactions;
identifying type of each transaction from the consumed enriched transactions by applying predefined rules; and
executing, for each type of transaction, the transaction level pricing and balance management algorithm to perform the following operations at transaction level at the time of transaction posting instead of balance level calculations at cycle time: fee calculations, interest charge calculations, payment allocations, payment reversal processing, balance management at transaction level, service customers with intra cycle financial estimates, and remove account processing at accumulated balance level.

16. The non-transitory computer readable medium according to claim 15, wherein the card is a credit card or a debit card.

17. The non-transitory computer readable medium according to claim 15, wherein the accumulated balance level includes purchase, cash, and promotions.

18. The non-transitory computer readable medium according to claim 15, in identifying type of each transaction, the instructions, when executed, cause the processor to further perform the following:
identifying one or more of the following transactions: credit card transaction; debit card transaction; customer disputing a transaction; customer requesting a change on annual percentage rate; payment transaction; and reversal transaction.

19. The non-transitory computer readable medium according to claim 15, the instructions, when executed, cause the processor to further perform the following:
storing all transactions with corresponding pricing task execution status onto a database.

20. The non-transitory computer readable medium according to claim 15, the instructions, when executed, cause the processor to further perform the following:
consuming all debits for promotion qualifications;
applying preconfigured promotional rules;
consuming account level promotion identifiers to be used for the promotion qualifications;
evaluating whether the transaction is eligible for any promotional offer or customer requested offer based on applying preconfigured promotional rules;
creating a record of promotion data associated with the promotional offer or the customer requested offer along with a transaction key onto a promotional database;
publishing, by accessing the promotional database, a response indicating promotion qualified "Yes" or "No" back to the pricing orchestrator module; and
updating corresponding transaction among the plurality of transactions in correspondence with publishing the response.
